# EUROPEAN PATENT APPLICATION

(11) **EP 4 632 867 A1**
(43) Date of publication of application: **15.10.2025**
(21) Application number: 23907903.1
(22) Date of filing: 22.12.2023
(51) Int. Cl.: H01M 10/0587, H01M 50/531, H01M 50/446, H01M 50/179

(54) **ELECTRODE ASSEMBLY, CYLINDRICAL BATTERY CELL, AND BATTERY PACK COMPRISING SAME**

(30) Priority: 23.12.2022 KR 20220183529
(71) Applicant: LG Energy Solution, Ltd., Seoul 07335 (KR)
(72) Inventor: WOO, Jae-Young, Daejeon 34122 (KR); PARK, Sang-Jin, Daejeon 34122 (KR); LEE, Kwan-Hee, Daejeon 34122 (KR); LEE, Myung-An, Daejeon 34122 (KR); LEE, Byoung-Gu, Daejeon 34122 (KR); LEE, Jun-Su, Daejeon 34122 (KR)
(74) Representative: Goddar, Heinz J.
(86) International application number: PCT/KR2023/021514
(87) International publication number: WO 2024/136620

(57) **Abstract**

According to an aspect of the present disclosure, the use of an uncoated portion protruding at an upper part and a lower part of an electrode assembly as an electrode tab reduces internal resistance of a battery cell and increases energy density.

According to another aspect of the present disclosure, the improved uncoated portion structure of the electrode assembly prevents interference between the uncoated portion of an electrode plate and a separator in the process of forming a beading portion of a battery can, thereby reducing the melting and damage of the separator during bending and welding of the uncoated portion.

## Description

### TECHNICAL FIELD

The present application claims priority to Korean Patent Application No. 10-2022-0183529 filed on December 23, 2022, in the Republic of Korea, the disclosure of which is incorporated herein by reference. The present disclosure relates to an electrode assembly, a cylindrical battery cell and a battery pack and a vehicle including the same.

### BACKGROUND ART

Due to being easily applicable to different types of products and having electrical properties such as high energy density, secondary batteries are commonly applied to not only portable devices but also electric vehicles (EVs) or hybrid electric vehicles (HEVs) that are powered by a source of electric power.

Secondary batteries remarkably reduce the use of fossil fuels, and in addition to the primary advantage, they do not generate by-products from the use of energy. From this perspective, secondary batteries are seen as a new source of energy with eco-friendliness and improved energy efficiency.

The types of secondary batteries widely used at present include lithium ion batteries, lithium polymer batteries, nickel cadmium batteries, nickel hydrogen batteries, nickel zinc batteries and so on. A unit secondary battery cell or a unit battery cell has an operating voltage of about 2.5V to 4.5V. Accordingly, when higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack and the electrical connection type may be variously set depending on the required output voltage and/or charge/discharge capacity.

Meanwhile, cylindrical, prismatic and pouch-type battery cells are known as the types of unit secondary battery cells. For example, a cylindrical battery cell is manufactured by winding a positive electrode and a negative electrode with a separator or an insulator interposed between them to form a jellyroll-type electrode assembly, and placing the electrode assembly in a battery can. Additionally, an uncoated portion of each of the positive electrode and the negative electrode may be connected to a strip-type electrode tab, and the electrode tab electrically connects the electrode assembly to an exposed electrode terminal. For reference, the positive electrode terminal is a cap plate of a sealing body that seals an open portion of the battery can, and the negative electrode terminal is the battery can. The conventional cylindrical battery cell having this structure has high resistance and low current collection efficiency and generates a large amount of heat because the electric current is concentrated on the strip-type electrode tab connected to the positive electrode uncoated portion and/or the negative electrode uncoated portion.

The resistance and heat generation issues are not critical to small cylindrical battery cells having 18650 or 21700 form factor. However, with the increasing form factor to apply cylindrical battery cells to electric vehicles, a large amount of heat may be generated near the electrode tab during fast charging, causing fires in the cylindrical battery cells.

To solve this problem, cylindrical battery cells (so-called tab-less cylindrical battery cells) having a structure for improved current collection efficiency have been suggested by designing such that the positive electrode uncoated portion and the negative electrode uncoated portion are located at the upper end and the lower end of the j ellyroll-type electrode assembly, respectively, and welding a current collector plate to the uncoated portion.

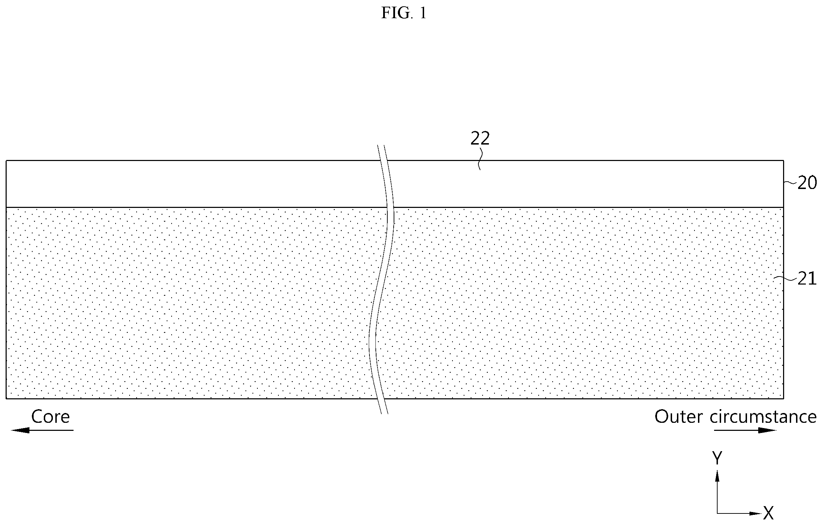

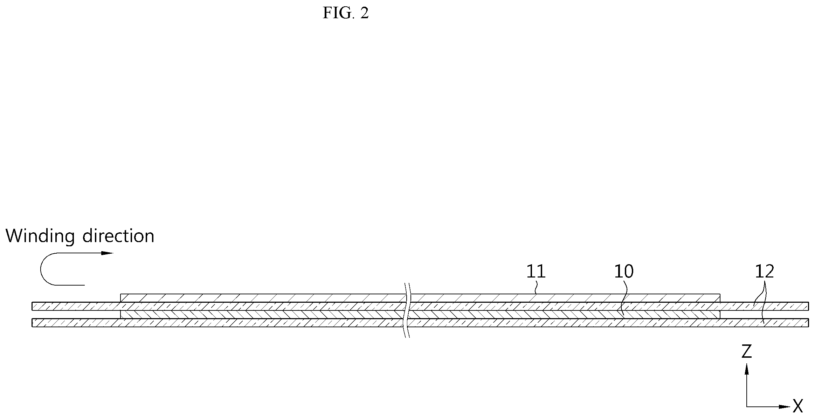

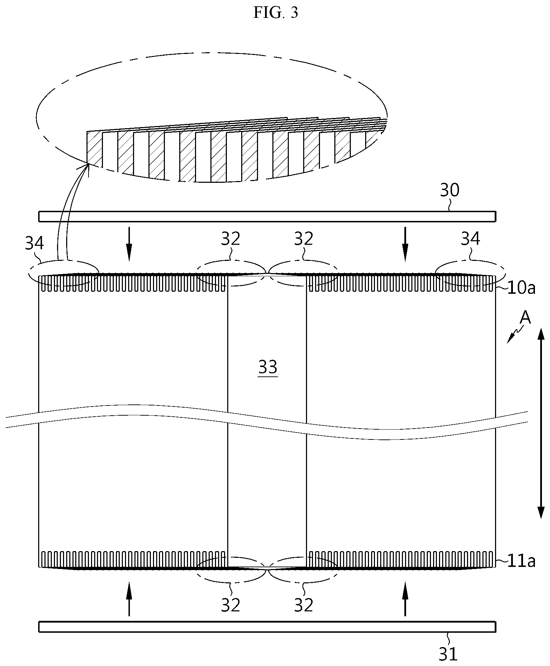

FIGs. 1 to 3 are diagrams showing a process of manufacturing a tab-less cylindrical battery cell. FIG. 1 shows the structure of an electrode plate, FIG. 2 shows a process of winding the electrode plate, and FIG. 3 shows a process of welding a current collector plate to a bent surface of an uncoated portion.

Referring to FIGs. 1 to 3, a first electrode plate 10 and a second electrode plate 11 have a structure in which an active material 21 is coated on the sheet-shaped current collector 20, and the uncoated portion 22 is present on a long side along a length direction X.

An electrode assembly A is made by stacking the first electrode plate 10 and the second electrode plate 11 in a sequential order together with two sheets of separators 12 and winding along the length direction X as shown in FIG. 2. In this instance, the uncoated portion of the first electrode plate 10 and the uncoated portion of the second electrode plate 11 are arranged in the opposite directions.

After the winding process, the uncoated portion 10a of the first electrode plate 10 and the uncoated portion 11a of the second electrode plate 11 are bent toward the core. Subsequently, the current collector plates 30, 31 are coupled to the uncoated portions 10a, 11a by welding, respectively.

Any electrode tab is not coupled to the positive electrode uncoated portion 10a and the negative electrode uncoated portion 11a, and the current collector plates 30, 31 are connected to an external electrode terminal. As a current path is formed with a large cross-sectional area along the winding axis direction Y' (see the arrow) of the electrode assembly A, the resistance of the battery cell reduces. It is because the resistance is inversely proportional to the cross-sectional area of the passage through which the current flows.

In the tab-less cylindrical battery cell, to improve the weld characteristics of the uncoated portions 10a, 11a and the current collector plates 30,31, it is necessary to bend the uncoated portions 10a, 11a as flat as possible by applying strong pressure to the welding position of the uncoated portions 10a, 11a.

However, the uncoated portions 10a, 11a may deform into irregular shape when bending the welding position of the uncoated portions 10a, 11a. In this case, when the deformed part contacts the electrode plate of the opposite polarity, internal short circuits or microcracks in the uncoated portions 10a, 11a may occur. Additionally, when bending the uncoated portion 32 adjacent to the core of the electrode assembly A, all or a considerate part of a cavity 33 at the core of the electrode assembly A is blocked. In this case, a problem occurs in the electrolyte solution injection process. That is, the cavity 33 at the core of the electrode assembly A is used as a passage for electrolyte solution injection. However, when the corresponding passage is blocked, it is difficult to inject the electrolyte solution. Additionally, in the process of inserting an electrolyte injector into the cavity 33, the uncoated portion 32 may be torn by the interference between the electrolyte injector and the uncoated portion 32 near the core.

Additionally, the bent parts of the uncoated portions 10a, 11a to which the current collector plates 30, 31 are welded should overlap in multilayers without an empty space (a gap), in order to obtain sufficient weld strength and prevent ablation of the separator or the active material due to laser penetration into the electrode assembly A when the state-of-the-art technique such as laser welding is used.

Meanwhile, the conventional tab-less cylindrical battery cell has the positive electrode uncoated portion 10a over the entire upper area of the electrode assembly A. Thus, when forming a beading portion by beading the outer circumferential surface at the upper end of the battery can, the upper edge area 34 of the electrode assembly A is pressed by the battery can. This pressing may cause local deformation of the electrode assembly A, and in this instance, the separator 12 may be torn, causing an internal short circuit. When the short circuit occurs in the battery, the battery may produce heat or explode.

Additionally, in the case of a non-notched jellyroll, after assembling, the current collector foil is folded to form an internal and external closed structure, which impedes the movement of the electrolyte solution to the electrode inside the jellyroll in the process of injecting the electrolyte solution, resulting in non-uniform electrolyte wetting characteristics. It is caused by the non-uniform electrolyte wetting path in the injection of the electrolyte solution. As a consequence, low uniformity of wetting increases inhomogeneity in the battery, resulting in an unstable solid electrolyte interphase (SEI) layer and increased resistance variation.

Additionally, in the existing electrode assembly, the positive electrode has a smaller area (in particular, the area of the electrode active material portion) than the negative electrode and especially in the width direction, the separator covers all the electrode active material portion of the first electrode plate and the electrode active material portion of the second electrode plate. In this case, when making the lower end portion of the electrode assembly flat by bending the uncoated portion of each electrode plate, the bent uncoated portion may contact the end of the separator and the separator may melt by the applied heat during welding of the uncoated portion, causing damage.

### SUMMARY

### Technical Problem

The present disclosure is designed under the above-described background, and therefore the present disclosure is directed to providing an electrode assembly with improved electrolyte wetting characteristics.

The present disclosure is further directed to providing an electrode assembly having an improved uncoated portion structure to mitigate stress applied to the exposed uncoated portion at two ends of the electrode assembly when bending the uncoated portion.

The present disclosure is further directed to providing an electrode assembly in which an electrolyte solution injection passage is not blocked when the uncoated portion is bent.

The present disclosure is further directed to providing an electrode assembly including a structure for preventing the contact between the upper edge of the electrode assembly and the inner surface of a battery can when beading the upper end of the battery can.

The present disclosure is further directed to providing an electrode assembly with higher energy density and lower resistance.

The present disclosure is further directed to providing a cylindrical battery cell including the electrode assembly of the improved structure, a battery pack including the same and a vehicle including the battery pack.

However, the technical problems to be solved by the present disclosure are not limited to the above-described problems, and these and other problems will be clearly understood by those skilled in the art from the following description.

### Technical Solution

The present disclosure relates to an electrode assembly for an electrochemical device. A first aspect of the present disclosure relates to the electrode assembly, and the electrode assembly includes a first electrode plate, a second electrode plate and a separator between the first electrode plate and the second electrode plate, wherein the first electrode plate is a positive electrode plate and the second electrode plate is a negative electrode plate, or the first electrode plate is a negative electrode plate and the second electrode plate is a positive electrode plate, wherein each of the first electrode plate, the second electrode plate and the separator has a strip shape having an aspect ratio of more than 1, and the first electrode plate, the second electrode plate and the separator are stacked such that a length direction of each of the first electrode plate, the second electrode plate, and the separator is parallel to each other, wherein each of the first electrode plate, the second electrode plate and the separator has a first side and a second side, wherein the first side is a first end in a width direction and the second side is a second end opposite the first side, wherein each of the first electrode plate and the second electrode plate includes a first part and a second part on at least one surface, the first part is a coated electrode active material portion and extends from the second side toward the first side, and the second part is an uncoated electrode active material portion and extends from the first side toward the electrode active material portion, wherein, in the electrode assembly, the first side of the first electrode plate and the first side of the second electrode plate are arranged facing opposite directions, and wherein, in the electrode assembly, the first side of the separator protrudes beyond the second side of the first electrode plate and is disposed on the electrode active material portion of the second electrode plate, and the second side of the separator protrudes beyond the second side of the second electrode plate and is disposed on the uncoated portion of the first electrode plate. **In** a specific embodiment of the present disclosure, the second electrode plate is a negative electrode plate, and the first electrode plate is a positive electrode plate.

According to a second aspect of the present disclosure, in the first aspect, on a width direction basis, a width of the electrode active material portion of the first electrode plate is narrower than a width of the electrode active material portion of the second electrode plate, and two ends of the electrode active material portion of the first electrode plate in the width direction are disposed between two ends of the electrode active material portion of the second electrode plate in the width direction.

According to a third aspect of the present disclosure, in the first or second aspect, at least part of the uncoated portion of at least one of the first electrode plate or the second electrode plate is split into a plurality of segments by a cutting groove of a predetermined depth.

According to a fourth aspect of the present disclosure, in the third aspect, each of the plurality of segments has a square or rectangular, trapezoidal, triangular, parallelogram, semicircular or half oval or ellipse structure.

According to a fifth aspect of the present disclosure, in the fourth aspect, the first electrode plate has the plurality of segments, and wherein the separator is disposed to cover a notching valley of the cutting groove of the plurality of segments.

According to a sixth aspect of the present disclosure, in any one of the first to fifth aspects, the electrode assembly has a plurality of winding turns provided by winding the first electrode plate, the second electrode plate and the separator around an axis in the length direction.

According to a seventh aspect of the present disclosure, in the fifth aspect, the electrode assembly has a plurality of winding turns provided by winding the first electrode plate, the second electrode plate and the separator around an axis in the length direction, and wherein all or at least some of the segments of the plurality of segments are radially bent with respect to the axis at a bend point, the bend point being any one point within the segments.

According to an eighth aspect of the present disclosure, in the seventh aspect, the second side of the separator is disposed on the uncoated portion of the first electrode plate and interposed between the electrode active material portion of the second electrode plate and the bend point.

According to a ninth aspect of the present disclosure, in the eighth aspect, the bend point is spaced 0.1 mm or more apart from the second side of the separator.

According to a tenth aspect of the present disclosure, in any one of the first to ninth aspects, the uncoated portion of at least one of the first electrode plate or the second electrode plate includes a core-side uncoated portion adjacent to a core of the electrode assembly, an outer circumference-side uncoated portion adj acent to an outer circumference surface of the electrode assembly and an intermediate uncoated portion between the core-side uncoated portion and the outer circumference-side uncoated portion, wherein at least one of the core-side uncoated portion of the at least one of the first electrode plate or the second electrode plate or the outer circumference-side uncoated portion of the at least one of the first electrode plate or the second electrode plate has a shorter distance from the electrode active material portion of the at least one of the first electrode plate or the second electrode plate to the first side of the at least one of the first electrode plate or the second electrode plate than the intermediate uncoated portion of the at least one of the first electrode plate or the second electrode plate, and wherein the electrode active material portion of the at least one of the first electrode plate or the second electrode plate has a constant width from the core of the electrode assembly to the outer circumference surface of the electrode assembly.

According to an eleventh aspect of the present disclosure, in any one of the first to tenth aspects, the uncoated portion of at least one of the first electrode plate or the second electrode plate includes a core-side uncoated portion adjacent to a core of the electrode assembly, an outer circumference-side uncoated portion adjacent to an outer circumference surface of the electrode assembly and an intermediate uncoated portion between the core-side uncoated portion and the outer circumference-side uncoated portion, wherein the core-side uncoated portion of the at least one of the first electrode plate or the second electrode plate has a shorter distance from the electrode active material portion of the at least one of the first electrode plate or the second electrode plate to the first side of the at least one of the first electrode plate or the second electrode plate than the intermediate uncoated portion of the at least one of the first electrode plate or the second electrode plate and the outer circumference-side uncoated portion of the at least one of the first electrode plate or the second electrode plate, and wherein the electrode active material portion of the at least one of the first electrode plate or the second electrode plate has a constant width from the core of the electrode assembly to the outer circumference surface of the electrode assembly.

According to a twelfth aspect of the present disclosure, in the tenth or eleventh aspect, the core-side uncoated portion of the at least one of the first electrode plate or the second electrode plate includes the uncoated portion of the electrode plate part corresponding to an innermost winding turn of the electrode assembly, and the outer circumference-side uncoated portion of the at least one of the first electrode plate or the second electrode plate includes the uncoated portion of the electrode plate part corresponding to an outermost winding turn of the electrode assembly.

According to a thirteenth aspect of the present disclosure, in the eleventh or twelfth aspect, all or at least part of the intermediate uncoated portion of the at least one of the first electrode plate or the second electrode plate is split into a plurality of segments.

According to a fourteenth aspect of the present disclosure, in the tenth or eleventh aspect, at least part of the intermediate uncoated portion of the at least one of the first electrode plate or the second electrode plate has a stepwise increasing height in a winding axis direction from the core of the electrode assembly toward the outer circumference surface of the electrode assembly.

According to a fifteenth aspect of the present disclosure, in the thirteenth or fourteenth aspect, at least part of the intermediate uncoated portion of the at least one of the first electrode plate or the second electrode plate has a stepwise increasing height in a winding axis direction from the core of the electrode assembly toward the outer circumference surface of the electrode assembly.

According to a sixteenth aspect of the present disclosure, in any one of the third to fifteenth aspects, a notching valley of each segment of the plurality of segments and the electrode active material portion of the at least one of the first electrode plate or the second electrode plate are spaced a predetermined distance apart from each other.

According to a seventeenth aspect of the present disclosure, in any one of the first to sixteenth aspects, the separator includes a porous polymer substrate; and a porous coating layer on at least one surface of the porous polymer substrate, the porous coating layer including inorganic particles and a binder polymer.

According to an eighteenth aspect of the present disclosure, in the seventeenth aspect, the inorganic particles include inorganic particles having hydrophilic properties on a surface.

A nineteenth aspect of the present disclosure relates to a cylindrical battery cell, and the cylindrical battery cell includes the electrode assembly according to any one of the first to eighteenth aspects; a battery can configured to accommodate the electrode assembly and electrically connected to the first electrode plate, the battery can having a first polarity; a sealing body configured to seal an open end of the battery can; and a terminal electrically connected to the second electrode plate, the terminal having an exposed surface, the terminal having a second polarity.

A twentieth aspect of the present disclosure relates to a battery pack, and the battery pack includes the cylindrical battery cell according to the nineteenth aspect.

### Advantageous Effects

According to an aspect of the present disclosure, the use of the uncoated portion protruding at the upper part and the lower part of the electrode assembly as the electrode tab may reduce the internal resistance of the battery cell and increase the energy density.

According to another aspect of the present disclosure, the improved uncoated portion structure of the electrode assembly may prevent the interference between the uncoated portion of the electrode plate and the separator in the process of forming the beading portion of the battery can, thereby reducing the melting and damage of the separator during the bending and welding of the uncoated portion.

According to another aspect of the present disclosure, the improved uncoated portion structure of the electrode assembly may prevent the uncoated portion from tearing when bending the uncoated portion, and adequately increase the number of overlapping layers of the uncoated portion, leading to improved weld strength. Furthermore, when forming the cutting groove in the uncoated portion of the electrode plate, it may be possible to form the notching valley as deep as possible (i.e., minimize the distance between the notching valley and the electrode active material portion), thereby achieving deeper notching.

According to another aspect of the present disclosure, the improved uncoated portion structure adjacent to the core of the electrode assembly may prevent the cavity at the core of the electrode assembly from being blocked when bending the uncoated portion, making it easy to perform the electrolyte solution injection process and the welding process of the battery can and the current collector plate.

According to another aspect of the present disclosure, it may be possible to provide the cylindrical battery cell having the structure for achieving low internal resistance, preventing internal short circuits and improving the weld strength of the current collector plate and the uncoated portion, and the battery pack and the vehicle including the same.

Besides, the present disclosure may have many other effects, and the effects will be described in each embodiment, or with regard to effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a plan view showing the structure of an electrode plate used to manufacture a conventional tab-less cylindrical battery cell.
FIG. 2 is a diagram showing a process of winding an electrode plate of a conventional tab-less cylindrical battery cell.
FIG. 3 shows a process of welding a current collector plate to a bent surface of an uncoated portion in a conventional tab-less cylindrical battery cell.
FIG. 4 is a plan view showing the structure of an electrode plate according to a first embodiment of the present disclosure.
FIG. 5 is a plan view showing the structure of an electrode plate according to a second embodiment of the present disclosure.
FIG. 6 is a plan view showing the structure of an electrode plate according to a third embodiment of the present disclosure.
FIG. 7a is a plan view showing the structure of an electrode plate according to a fourth embodiment of the present disclosure.
FIG. 7b is a plan view showing the structure of an electrode plate according to a fifth embodiment of the present disclosure.
FIG. 7c is an enlarged view of segments.
FIG. 8 shows a cross section of an electrode assembly showing a conventional stack structure.
FIGs. 9a and 9b show a cross section of an electrode assembly showing a stack structure according to the present disclosure.
FIGs. 10a and 10b show the definition of width, height and pitch of segments according to an embodiment of the present disclosure.
FIG. 11 is a cross-sectional view of a jellyroll-type electrode assembly including a first electrode plate (a positive electrode plate) and a second electrode plate (a negative electrode plate) using an electrode plate of a first embodiment, taken along a Y axis direction (a winding axis direction).
FIG. 12 is a cross-sectional view of a jellyroll-type electrode assembly including a first electrode plate (a positive electrode plate) and a second electrode plate (a negative electrode plate) using an electrode plate of a second embodiment, taken along a Y axis direction (a winding axis direction).
FIG. 13 is a cross-sectional view of a jellyroll-type electrode assembly including a first electrode plate (a positive electrode plate) and a second electrode plate (a negative electrode plate) using any one of electrode plates of third to fifth embodiments (their variations), taken along a Y axis direction (a winding axis direction).
FIG. 14 is a cross-sectional view of an electrode assembly according to another embodiment of the present disclosure, taken along a Y axis direction (a winding axis direction).
FIG. 15 is a cross-sectional view of an electrode assembly according to another embodiment of the present disclosure, taken along a Y axis direction (a winding axis direction).
FIG. 16 is a cross-sectional view of an electrode assembly according to another embodiment of the present disclosure, taken along a Y axis direction (a winding axis direction).
FIG. 17 is a cross-sectional view of a cylindrical battery cell according to an embodiment of the present disclosure, taken along a Y axis direction.
FIG. 18 is a cross-sectional view of a cylindrical battery cell according to another embodiment of the present disclosure, taken along a Y axis direction.
FIG. 19 is a cross-sectional view of a cylindrical battery cell according to another embodiment of the present disclosure, taken along a Y axis direction.
FIG. 20 is a cross-sectional view of a cylindrical battery cell according to another embodiment of the present disclosure, taken along a Y axis direction.
FIG. 21 is a cross-sectional view of a cylindrical battery cell according to another embodiment of the present disclosure, taken along a Y axis direction.
FIG. 22 is a cross-sectional view of a cylindrical battery cell according to another embodiment of the present disclosure, taken along a Y axis direction.
FIG. 23 is a cross-sectional view of a cylindrical battery cell according to another embodiment of the present disclosure, taken along a Y axis direction.
FIG. 24 is a cross-sectional view of a cylindrical battery cell according to another embodiment of the present disclosure, taken along a Y axis direction.
FIG. 25 is a cross-sectional view of a cylindrical battery cell according to another embodiment of the present disclosure, taken along a Y axis direction.
FIG. 26 is a diagram schematically showing the configuration of a battery pack according to an embodiment of the present disclosure.
FIG. 27 is a diagram schematically showing a vehicle including a battery pack according to an embodiment of the present disclosure.
FIG. 28 shows battery capacity retention characteristics according to example and comparative example.
FIG. 29 is a photographic image showing an electrode assembly according to the present disclosure before and after winding.
FIG. 30 shows each collection location of an electrolyte filled sample in example and comparative example.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

In addition, to help the understanding of the present disclosure, the accompanying drawings may illustrate some elements in exaggerated dimensions, not in actual scale. Furthermore, the same element in different embodiments may be given the same reference numeral.

### (Definition)

For convenience of description, in the specification, a sheet-shaped structure such as a first electrode plate, a second electrode plate and a separator, or an electrode assembly including the first electrode plate, the second electrode plate and the separator stacked has a strip shape with an aspect ratio of more than 1. Here, a direction on the basis of a longer one of a horizontal side and a vertical side is referred to as a length direction X, and a direction perpendicular to the length direction, i.e., a direction on the basis of a shorter one is referred to as a width direction Y. Additionally, the electrode assembly may be wound into a jellyroll shape, and a direction following the length direction of the winding axis of the electrode assembly is referred to as an axial direction Y'. The axial direction may be the same as the width direction. Additionally, a direction around the winding axis is referred to as a circumferential direction X'. The circumferential direction may be the same as the length direction. Additionally, a direction facing toward the winding axis or a direction facing away from the winding axis is referred to as a radial direction Z. In particular, the direction facing toward the winding axis is referred to as a centripetal direction and the direction facing away from the winding axis is referred to as a centrifugal direction.

To begin with, the structure of an electrode assembly according to an embodiment of the present disclosure will be described.

The electrode assembly includes a first electrode plate, a second electrode plate and a separator between the first electrode plate and the second electrode plate. In the present disclosure, each of the first electrode plate, the second electrode plate and the separator has, independently, a strip shape having an aspect ratio of more than 1. In the electrode assembly, the first electrode plate, the second electrode plate and the separator may be stacked such that their length directions are parallel to each other.

The first electrode plate and the second electrode plate include a current collector, for example, an electrically conductive foil, and an electrode active material portion of a predetermined thickness at a second part on at least one surface of the current collector. In an embodiment of the present disclosure, the first electrode plate may be a positive electrode plate and the second electrode plate may be a negative electrode plate. On the contrary, the first electrode plate may be a negative electrode plate and the second electrode plate may be a positive electrode plate. In a specific embodiment of the present disclosure, the first electrode plate may be a positive electrode plate the second electrode plate may be a negative electrode plate.

Each of the first electrode plate, the second electrode plate and the separator independently has a first side which is an end in the width direction and a second side which is the other end opposite the first side. The sides which are the ends of the first electrode plate and the second electrode plate in the width direction correspond to the first side and the second side, respectively, and in the first electrode plate and the second electrode plate, the first side is included in an uncoated portion of each electrode plate, and the second side is included in the electrode active material portion of each electrode plate. The first side and the second side are arranged on the opposite sides in the width direction Y.

Each electrode plate includes a first part and the second part on at least one surface. The first part is a coated electrode active material portion and extends from the second side toward the first side. In an embodiment of the present disclosure, in each electrode plate, the electrode active material portion may have a constant width along the length direction X. The second part is an uncoated portion not coated with the electrode active material portion and extends from the first side to the electrode active material portion toward the second side. As described below, in each electrode plate, the uncoated portion may not have a constant width along the length direction. That is, the distance from a boundary Bou of the electrode active material portion and the uncoated portion to the second side may not be constant. Each electrode plate may independently have the electrode active material portion on the two surfaces, and when the electrode active material portion is present on the two surfaces, the electrode active material portion of a surface and the electrode active material portion of the back surface are arranged at facing locations. That is, in each electrode plate, the uncoated portion does not have the electrode active material portion on both the two surfaces of the current collector. The uncoated portion itself may be provided as an electrode tab or may be split into segments as described below, and the segments may be provided as an electrode tab.

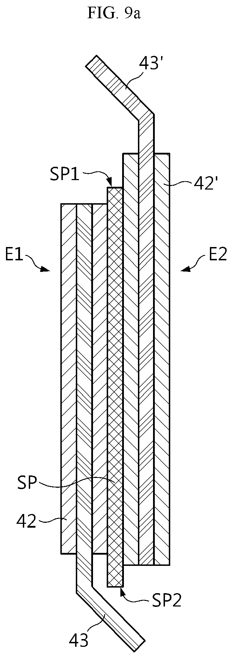

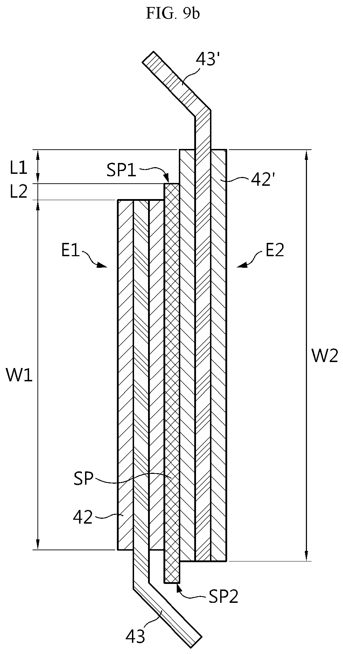

Meanwhile, in the electrode assembly, the first side of the first electrode plate and the first side of the second electrode plate are arranged facing toward the opposite directions (see FIGs. 9a and 9b).

Additionally, in the electrode assembly, on the basis of the width direction, the width of the electrode active material portion of the first electrode plate is narrower than the width of the electrode active material portion of the second electrode plate, and two ends of the electrode active material portion of the first electrode plate in the width direction are disposed between two ends of the electrode active material portion of the second electrode plate in the width direction (see FIGs. 9a and 9b).

In the electrode assembly, the first side of the separator is extended beyond the second side of the first electrode plate and disposed on the electrode active material portion of the second electrode plate. Additionally, the second side of the separator is extended beyond the second side of the second electrode plate and disposed on the uncoated portion of the first electrode plate (see FIGs. 9a and 9b).

In a specific embodiment of the present disclosure, the second electrode plate is preferably a negative electrode plate. When designing the battery, taking the NP ratio into account, the capacity of the positive electrode is high, and to assure the capacity of the positive electrode, it is necessary to design such that the dimension (width) of the negative electrode is larger than the dimension (width) of the positive electrode. To improve the wetting performance of the electrode assembly by exposing a predetermined part of the negative electrode active material portion of the negative electrode plate without direct contact between the positive electrode and the negative electrode, the electrode active material portion surface of the positive electrode plate may be completely covered with the separator and part of the electrode active material portion surface of the negative electrode plate may be exposed. Additionally, the width of the electrode active material portion of the positive electrode plate may be narrower than the width of the electrode active material portion of the negative electrode plate and the positive electrode active material portion may be disposed without departing from the negative electrode active material portion on the width basis.

Meanwhile, in an embodiment of the present disclosure, at least part of the uncoated portion of at least one of the first electrode plate or the second electrode plate is split into a plurality of segments by a cutting groove of a predetermined depth. For example, the positive electrode uncoated portion may have the plurality of segments on all or at least part of the second side. Along with this or independently of this, the negative electrode uncoated portion may have the plurality of segments on all or at least part of the second side. Each of the plurality of segments may have a square or rectangular, trapezoidal, triangular, parallelogram, semicircular or half oval or ellipse structure.

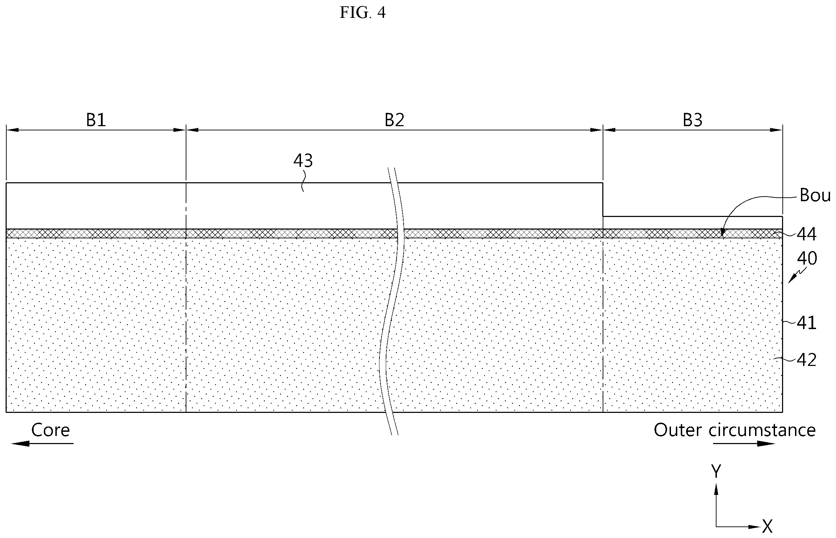

FIG. 4 is a plan view showing the structure of the electrode plate 40 according to the first embodiment of the present disclosure. The electrode plate may be applied to either the first electrode plate or the second electrode plate or both.

Referring to FIG. 4, the second side is a side formed along the lowermost end portion of the electrode active material portion 42 in the winding axis direction Y, and the first side is a side formed along the uppermost end portion of the uncoated portion 43 in the winding axis direction Y.

Each electrode plate independently includes the electrode active material portion or the first part on at least one surface or two surfaces. The first part extends a predetermined length from the second side toward the first side. FIG. 4 shows the shape of the electrode plate before the winding of the electrode assembly. Referring to FIG. 4, the electrode active material portion may have the constant width over the entire length of the electrode plate from the second side to the start of the uncoated portion in the axial direction.

Referring to FIG. 4, the electrode plate according to an embodiment of the present disclosure is either the second electrode plate or the first electrode plate or both. The electrode plate 40 includes the current collector 41 formed of a metal foil and the electrode active material portion 42. The metal foil may be aluminum or copper, and is properly selected according to the polarity of the electrode plate 40. The electrode active material portion is formed on at least one surface of the current collector 41, and the uncoated portion 43 is disposed at the end of the long side of the current collector in the length direction X. The uncoated portion 43 is where the electrode active material is not coated.

In an embodiment of the present disclosure, an insulation coating layer 44 may be formed at the boundary between the electrode active material portion 42 and the uncoated portion 43. At least part of the insulation coating layer 44 overlaps the boundary between the electrode active material portion 42 and the uncoated portion 43. The insulation coating layer 44 may include a polymer resin and/or inorganics such as Al₂O₃.

In an embodiment of the present disclosure, the uncoated portion 43 include a core-side uncoated portion B1 adjacent to the core of the electrode assembly, an outer circumference-side uncoated portion B3 adjacent to the outer circumference of the electrode assembly, and an intermediate uncoated portion B2 between the core-side uncoated portion B1 and the outer circumference-side uncoated portion B3.

The core-side uncoated portion B1, the outer circumference-side uncoated portion B3 and the intermediate uncoated portion B2 may be defined as the uncoated portion of the area adjacent to the core, the uncoated portion of the area adjacent to the outer circumference and the uncoated portion of the remaining area except them, respectively, when each electrode plate 40 is wound into the jellyroll-type electrode assembly. The B1/B2 boundary may be properly defined as a point at which the height (or change pattern) of the uncoated portion substantially changes from the core of the electrode assembly toward the outer circumference or a point of a predetermined % (for example, 5%, 10%, 15% of the radius) on the basis of the radius of the electrode assembly. The B2/B3 boundary may be defined as a point at which the height (or change pattern) of the uncoated portion substantially changes from the outer circumference of the electrode assembly toward the core or a point of a predetermined % (for example, 85%, 90%, 95% of the radius) on the basis of the radius of the electrode assembly. When the B1/B2 boundary and the B2/B3 boundary are specified, the intermediate uncoated portion B2 may be automatically specified. When only the B1/B2 boundary is specified, the B2/B3 boundary may be properly selected from points near the outer circumference of the electrode assembly. On the contrary, when only the B2/B3 boundary is specified, the B1/B2 boundary may be properly selected from points near the core of the electrode assembly. In the first embodiment, the height of the uncoated portion 43 is not uniform and has a relative difference along the winding direction X'. That is, the height (length in the Y axis direction) of the outer circumference-side uncoated portion B3 is smaller than the core-side uncoated portion B1 and the intermediate uncoated portion B2. In an embodiment of the present disclosure, in the electrode plate according to the first embodiment, at least part of the uncoated portion may be split into the plurality of segments by the cutting groove of the predetermined depth.

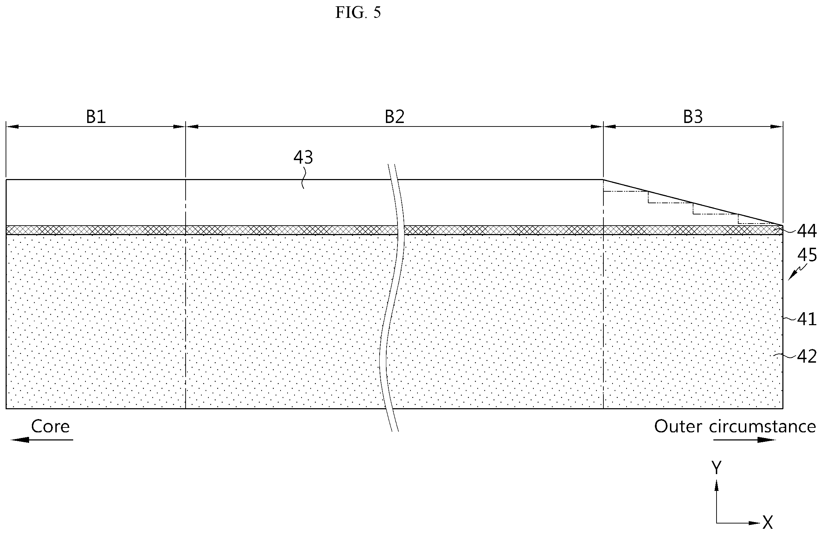

FIG. 5 is a plan view showing the structure of the electrode plate 45 according to the second embodiment of the present disclosure.

Referring to FIG. 5, the electrode plate 45 of the second embodiment has substantially the same configuration as the first embodiment, only different in that the height of the outer circumference-side uncoated portion B3 gradually decreases toward the outer circumference. In a variation, the outer circumference-side uncoated portion B3 may be changed to a step shape (see the dashed line) with stepwise decreasing height. In an embodiment of the present disclosure, in the electrode plate according to the second embodiment, at least part of the uncoated portion may be split into the plurality of segments by the cutting groove of the predetermined depth.

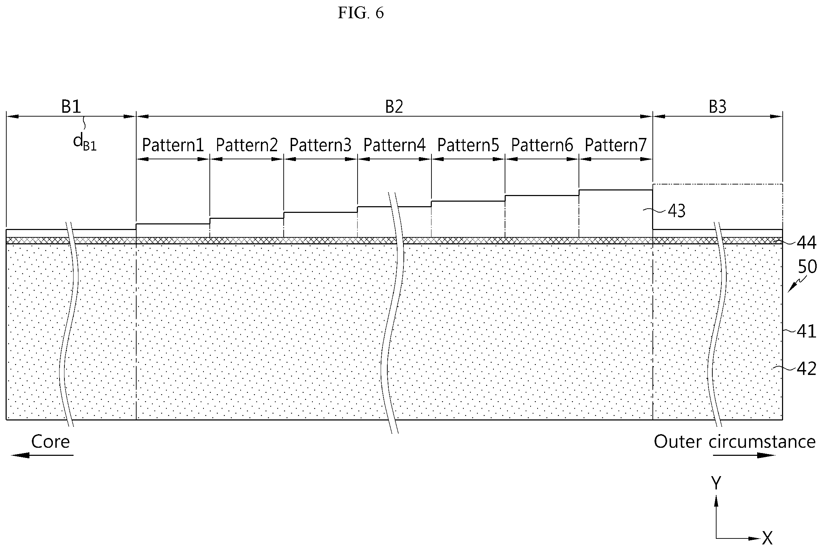

FIG. 6 is a plan view showing the structure of the electrode plate 50 according to the third embodiment of the present disclosure. Referring to FIG. 6, the electrode plate 50 of the third embodiment has the core-side uncoated portion B1 and the outer circumference-side uncoated portion B3 that are smaller in height than the intermediate uncoated portion B2. Additionally, the height of the core-side uncoated portion B1 and the height of the outer circumference-side uncoated portion B3 may be equal or different. Preferably, the height of the intermediate uncoated portion B2 may have a step shape that stepwise increases from the core toward the outer circumference.

Pattern 1 to pattern 7 are divisions of the intermediate uncoated portion B2 based on the location at which the height of the uncoated portion 43 changes. Preferably, the number of patterns and the height (length in the Y direction) and width (length in the X direction) of each pattern may be adjusted to dissipate stress as much as possible during the bending of the uncoated portion 43. The stress dissipation is for the purpose of preventing the uncoated portion 43 from tearing.

The width d_{B1} of the core-side uncoated portion B1 is designed in the condition that the cavity at the core of the electrode assembly is not blocked when the patterns of the intermediate uncoated portion B2 are bent toward the core.

In the electrode plate according to the third embodiment, at least part of the uncoated portion may be split into the plurality of segments by the cutting groove of the predetermined depth.

In an example, the width d_{B1} of the core-side uncoated portion B1 may increase in proportion to the height of the uncoated portion of pattern 1 or the height of the segments of pattern 1.

In a specific example, when the electrode plate 60 is used to manufacture an electrode assembly of a cylindrical cell with 46800 form factor, the width d_{B1} of the core-side uncoated portion B1 may be set to 180 to 350 mm according to the core diameter of the electrode assembly.

In an embodiment, the width of each pattern may be designed to form the same winding turn of the electrode assembly.

In a variation, the height of the intermediate uncoated portion B2 may have a step shape that increases and then decreases from the core toward the outer circumference.

In another variation, the outer circumference-side uncoated portion B3 may be modified to have the same structure as the second embodiment.

In still another variation, the pattern structure applied to the intermediate uncoated portion B2 may be extended to the outer circumference-side uncoated portion B3 (see the dashed line).

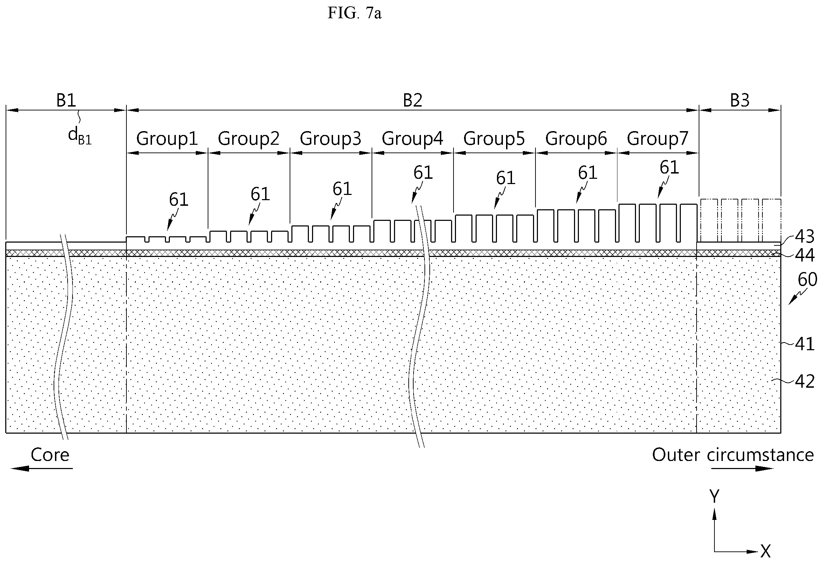

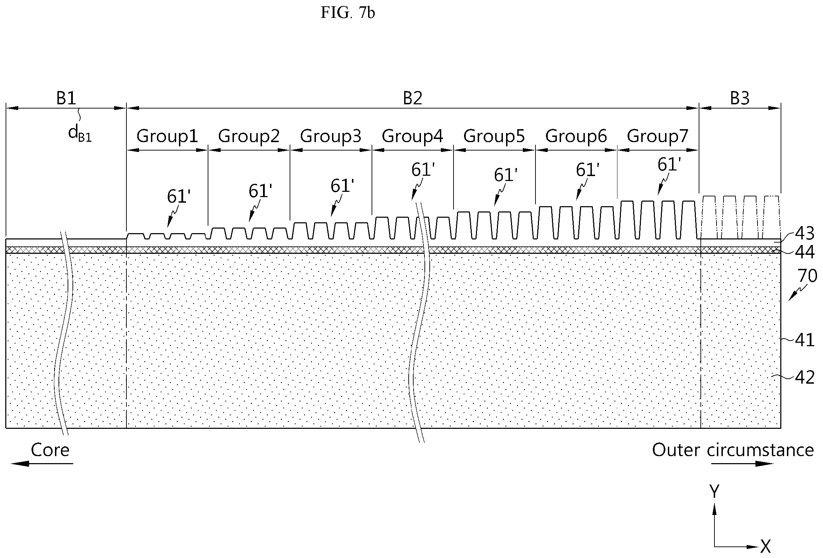

FIG. 7a is a plane view showing the structure of the electrode plate 60 according to the fourth embodiment of the present disclosure, and FIG. 7b is a plane view showing the structure of the electrode plate 70 according to the fifth embodiment of the present disclosure. FIGs. 7a and 7b show that the segments are formed over the entire area of the intermediate uncoated portion.

Referring to FIG. 7a, the electrode plate 60 of the fourth embodiment has the core-side uncoated portion B1 and the outer circumference-side uncoated portion B3 that are smaller in height than the intermediate uncoated portion B2. Additionally, the height of the core-side uncoated portion B1 and the height of the outer circumference-side uncoated portion B3 may be equal or different.

Preferably, at least part of the intermediate uncoated portion B2 may include the plurality of segments 61. The height of the plurality of segments 61 may increase stepwise from the core to the outer circumference.

The segments 61 may be formed by laser notching. The segments 61 may be formed by the known metal foil cutting process such as ultrasonic cutting or punching.

In the fourth embodiment, a predetermined gap is preferably present between the notching valley between the segments 61 and the electrode active material portion 42 to prevent damage to the active material portion 42 and/or the insulation coating layer 44 during the bending of the uncoated portion 43. It is because stress concentrates on the lower end of the cutting line when bending the uncoated portion 43. The gap is preferably from 0.2 to 4 mm. When the gap is adjusted to the corresponding numerical range, it may be possible to prevent damage to the active material portion 42 and/or the insulation coating layer 44 near the lower end of the cutting line due to stress when bending the uncoated portion 43. Additionally, the gap may prevent damage to the active material portion 42 and/or the insulation coating layer 44 due to the tolerances during notching or cutting of the segments 61. Preferably, when the electrode plate 40 is wound into the electrode assembly, at least part of the insulation coating layer 44 may be exposed to the outside of the separator. In this case, the insulation coating layer 44 may support the notching valley during the bending of the segments 61.

The gap between the notching valley of the segments and the electrode active material portion may be preferably 1.0 mm or more. It would be more effective when the corresponding electrode is a negative electrode.

The gap between the notching valley of the segments and the electrode active material portion may be, more preferably, 2.0 mm or more. It would be more effective when the corresponding electrode is a positive electrode.

When the gap is smaller than the aforementioned range, the above-described damage prevention effect is not adequately exerted, and when the gap is larger than the aforementioned range, the damage prevention effect does not increase and the capacity of the electrode decreases.

The boundary area between the uncoated portion where the electrode active material portion is not coated and the coated portion where the electrode active material portion is coated may be covered by the insulation layer, and in this instance, a predetermined gap may be present between the notching valley of the segments and the insulation layer. The gap may be from 0.2 mm to 1.5 mm.

When the gap is smaller than the aforementioned range, the above-described damage prevention effect is not adequately exerted, and when the gap is larger than the aforementioned range, the damage prevention effect does not increase and the segment bending support effect of the insulation coating layer decreases.

The plurality of segments 61 may form a plurality of segment groups from the core to the outer circumference. The width, height and pitch of the segments in the same segment group may be substantially equal.

FIG. 7b is a plan view showing the structure of the electrode plate 70 according to the fifth embodiment of the present disclosure.

Referring to FIG. 7b, the electrode plate 70 of the fifth embodiment is substantially the same as the fourth embodiment (or variations) except that the shape of the segments 61' is changed from rectangular to trapezoidal shape.

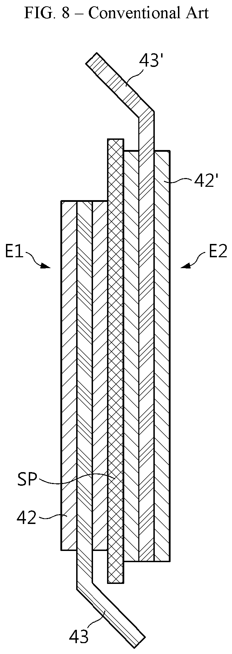

Subsequently, the electrode assembly according to an embodiment of the present disclosure will be described in more detail. FIG. 8 shows a cross section of the electrode assembly showing the conventional stack structure. Referring to FIG. 8, on the basis of the width direction, the electrode active material portions of the first electrode and the second electrode are fully covered by the separator and each of the two ends of the separator is extended outward from the electrode active material portion.

FIGs. 9a and 9b show a cross section of the electrode assembly showing the stack structure according to the present disclosure. Referring to FIGs. 9a and 9b, the first side of the first electrode plate and the first side of the second electrode plate are arranged facing the opposite directions, and on the basis of the width direction, the width of the electrode active material portion of the first electrode plate is narrower than the width of the electrode active material portion of the second electrode plate. The two ends of the electrode active material portion of the first electrode plate in the width direction are disposed between the two ends of the electrode active material portion of the second electrode plate in the width direction. As described above, in the present disclosure, preferably, the second electrode plate is a negative electrode plate, and the first electrode plate is a positive electrode plate.

In the electrode assembly, the first side of the separator is extended beyond the second side of the first electrode plate and disposed on the electrode active material portion of the second electrode plate. Additionally, the second side of the separator is extended beyond the second side of the second electrode plate and disposed on the uncoated portion of the first electrode plate.

Subsequently, the location of the separator in the electrode assembly of the present disclosure will be described in more detail with reference to FIGs. 9a and 9b.

Referring to FIGs. 9a and 9b, the first side SP1 which is an end of the separator is extended outward from the second side of the first electrode plate E1 and disposed on the electrode active material portion 42' of the second electrode plate E2.

In an embodiment of the present disclosure, the distance L₁ between the first side of the separator and the boundary Bou between the electrode active material portion 42' and the uncoated portion 43' of the second electrode plate may be a maximum of about 3.0 mm. When the distance from the first side of the separator to the boundary Bou is more than the aforementioned range, the width of the positive electrode active material portion is too smaller than the negative electrode active material portion, making it difficult to set the optimum NP ratio. Meanwhile, the distance L₁ may be 0.3 mm or more, 0.5 mm or more, or 1.0 mm or more. When the distance L₁ is inadequate, the electrolyte wetting improvement effect is not adequately exerted in the process of injecting the electrolyte solution due to low exposure of the separator and the electrode active material portion of the second electrode plate (for example, the negative electrode plate).

Meanwhile, the distance L₂ between the second side of the first electrode plate and the first side of the separator is preferably a minimum of 1.0 mm. For example, the distance L₂ may be 1.2 mm or more, 1.5 mm or more, 2.0 mm or more, or 2.5 mm or more. When the distance is too short, the separator may not adequately insulate the positive electrode from the negative electrode. Meanwhile, the distance L₂ is not limited to a particular range, but may be 5.0 mm or less, or 4.5 mm or less, or 4.0 mm or less, or 3.5 mm or less, or 3.0 mm or less, or 2.5 mm or less, or 2.0 mm or less. When L₂ is too large, the NP ratio may not be properly designed, and the battery may not have sufficient capacity due to too narrow width of the positive electrode.

Meanwhile, in a specific embodiment of the present disclosure, a ratio of distance L₁:L₂ may be set to 2:1 to 3:1.

Referring back to FIGs. 9a and 9b, the second side SP2 of the separator is extended outward from the second side of the second electrode plate E2 and disposed on the uncoated portion of the first electrode plate E1. Additionally, in a specific embodiment of the present disclosure, the uncoated portion of the first electrode plate may include the plurality of segments, and in this instance, the second side of the separator may be disposed to cover the notching valley of the cutting groove of the uncoated portion segments of the first electrode plate. In an embodiment of the present disclosure, the location of the notching valley between the plurality of segments may be the same.

In the present disclosure, the electrode assembly may be formed into a jellyroll type by winding the first electrode plate, the second electrode plate and the separator around the axis in a direction, and the j ellyroll-type electrode assembly may have a plurality of winding turns. In the jellyroll-type electrode assembly, all or at least some of the segments may be radially bent with respect to the axis at a bend point that is any one point within the segments. In the present disclosure, the bend point may be any one point between the notching valley and the uppermost end of each segment, and the distance between the uppermost end of the segment and the bend point may be shorter than the distance between the uppermost end of the segment and the notching valley.

More specifically, the second side which is the other end of the separator may be located between the bend point of the first electrode plate and Bou (the boundary line between the electrode active material portion and the uncoated portion), and furthermore, is extended beyond the second side of the second electrode plate.

Subsequently, the uncoated portion of each electrode plate and the size and shape of the segments will be described in more detail.

Meanwhile, in the present disclosure, either the first electrode plate or the second electrode plate or both may have the uncoated portion of different height along the length direction. Additionally, the segments of the uncoated portion may be different in height along the length direction. Each cutting groove may be different in shape and may be also different in height of the notching valley. That is, the shape and size of the segments and the shape and size of the cutting grooves may be different.

**In** an embodiment of the present disclosure, the uncoated portion includes the core-side uncoated portion adj acent to the core of the electrode assembly, the outer circumference-side uncoated portion adjacent to the outer circumference surface of the electrode assembly, and the intermediate uncoated portion between the core-side uncoated portion and the outer circumference-side uncoated portion.

Preferably, at least one of the core-side uncoated portion or the outer circumference-side uncoated portion may be smaller in height than the intermediate uncoated portion.

In the present disclosure, the height of the uncoated portion and the height of the segments refer to the distance from the boundary line Bou between the electrode active material portion and the uncoated portion to the first side. More specifically, in the region in which the segments are not formed, the height of the uncoated portion refers to the distance from the boundary between the electrode active material portion and the uncoated portion to the first side, and in the region in which the segments are formed, the first side refers to a location corresponding to the uppermost end of the segments, and the cutting groove part between the segments is not considered when measuring the height of the uncoated portion in the region in which the segments are formed.

Additionally, the height of the notching valley is based on a part of the cutting groove having the lowest height.

In the present disclosure, the electrode assembly may wound into a jellyroll type, and in this instance, all or at least some of the segments are bent in the radial direction of the electrode assembly (toward the winding center) or an opposite direction to the radius. The bending of the segments may be done at the bend point spaced apart from a predetermined height above the notching valley (the bottom of the cutting groove). In the present disclosure, the bend point refers to a point at which a slope of a tangent line starts to reach 45° or less when bending the segments toward the center by an external force. The slope of the tangent line refers to an angle between the tangent line to the bend point and a plane perpendicular to the winding axis of the electrode assembly.

Meanwhile, in the present disclosure, the height corresponding to the notching valley of the plurality of cutting grooves may be equal or different.

Meanwhile, in an embodiment of the present disclosure, the bend point may be located about 2 mm to 3 mm above from the notching valley.

In the present disclosure, the second side of the separator may be disposed on the uncoated portion of the first electrode plate and located at the lower position than the height of the bend point of the segments of the first electrode plate.

According to an embodiment of the present disclosure, the second side of the separator may be controlled to be located below the bend point, i.e., adjacent to the electrode active material portion to allow the electrolyte solution to flow into the electrode assembly along the notching valley (an empty space), in order to give a beneficial effect on electrolyte wetting. Specifically, the electrolyte solution is fed into the electrode assembly, and in this instance, the electrolyte solution moves to the cutting groove between the segments, and in this instance, the electrolyte solution infiltrates again into the end of the separator located close to the notching valley and eventually into the active material portion of the electrode. As a result, uniformity in electrolyte wetting within the electrode assembly increases.

As the end of the separator in the width direction is farther away in the outward direction of the electrode assembly, the weld characteristics may be adversely affected, and as the end of the separator in the width direction is closer to the inside of the jellyroll, i.e., located at the inner position of the electrode assembly, there is a higher risk that the positive electrode and the negative electrode will be shorted.

Accordingly, the present disclosure is characterized in that the two ends of the separator in the width direction are controlled to be disposed at the specific locations of the first electrode plate and the second electrode plate as described above.

According to a further specific embodiment of the present disclosure, the electrode assembly is wound into a jellyroll type, and the 'segment having the smallest height' among the 'bent segments' in the uncoated portion of each electrode plate is referred to as a 'minimum bent segment'.

In a specific embodiment of the present disclosure, the minimum bent segment in each electrode plate may be 2 mm or more, and in this instance, the height of the minimum bent segment is higher than the height of the bend point. When the height of the segments in the electrode plate is less than 2 mm, there is a likelihood that the bending of the segments may be not smoothly done due to the interference of the separator and the segments. In each electrode plate, the minimum bent segment may be determined among the segments having the height of 2 mm or more.

Additionally, in an embodiment of the present disclosure, each electrode plate may further include segments (segments A) having smaller height than the minimum bent segment. In this instance, the segments A are not bent. In a specific embodiment, the segments A may be disposed closer to the core than the other segments among the plurality of segments.

In an embodiment of the present disclosure, each electrode plate does not include segments having smaller height than the minimum bent segment and the minimum bent segment may be the smallest segment.

In an embodiment of the present disclosure, the second side of the separator may be disposed at a location of less than 50%, 40% or less, 30% or less, 20% or less or 10% or less of the height Ha of the minimum bent segment of the first electrode plate. Preferably, the second side of the separator may be located on the uncoated portion of the first electrode plate within 30% of the height Ha of the minimum bent segment. In this instance, the separator may be disposed such that the notching valley of the cutting groove between the segments of the first electrode plate is covered with the separator to avoid exposure. When the location of the second side of the separator is outside of the aforementioned range, there is a risk that the separator may be damaged by heat when welding the segments in the subsequent step.

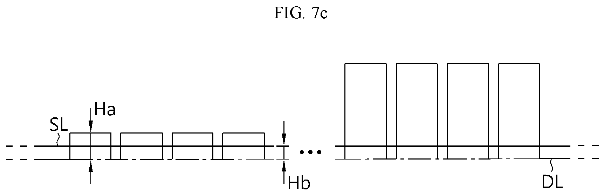

According to FIG. 7c, group 1 segments of the first electrode plate may be the minimum bent segment, and the second side of the separator may be located less than 50% or 30% or less of the height Ha of the minimum bent segment. More specifically, the group 1 segments may be the minimum bent segment, and the second side of the separator may be located on the positive electrode uncoated portion within 30% of the height Ha of the minimum bent segment.

According to an embodiment of the present disclosure, the second side of the separator may be located within a maximum of 3 mm or a maximum of 1.5 mm from Bou of the first electrode plate.

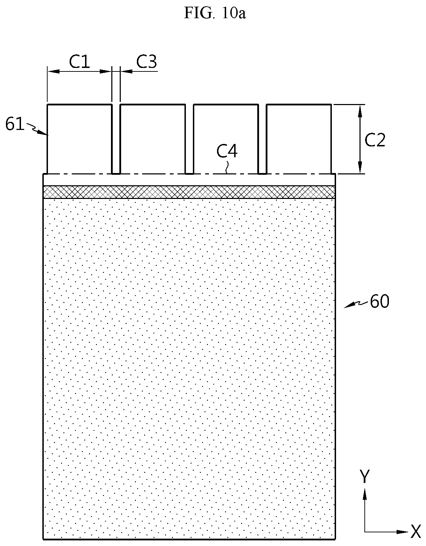

FIG. 10a is a diagram showing the definition of the width, height and pitch of the segments 61, i.e., the distance between the segments 61, according to an embodiment of the present disclosure.

Referring to FIG. 10a, the width C1, height C2 and pitch C3 of the segments 61 are designed to prevent the uncoated portion 43 from tearing when bending the uncoated portion 43, adequately increase the number of overlapping layers of the uncoated portion 43 to improve the weld strength and prevent abnormal deformation of the uncoated portion 43. The abnormal deformation refers to irregular deformation caused by the collapse of the C4 part that has failed to keep it in a straight line state.

According to an embodiment of the present disclosure, preferably, the width C1 of the segments 61 may be adjusted in a range between 1 and 6 mm. When C1 is less than 1 mm, there may be an empty space (a gap) or an area with insufficient overlap for ensuring adequate weld strength when the segments 61 are bent toward the core. In contrast, when C1 is larger than 6 mm, due to the curvature of the wound electrode, the uncoated portion 43 near the notching valley may be torn by stress when bending the segments 61. Additionally, the height C2 of the segments 61 may be adjusted in a range between 2 mm and 10 mm. When the height C2 of the segments 61 is less than 2 mm, the bending of the segments 61 is not smoothly done or there is an empty space (a gap) or an area with insufficient overlap for ensuring adequate weld strength when the segments 61 are bent toward the core. In contrast, when C2 is larger than 10 mm, it is difficult to manufacture the electrode plate while uniformly maintaining the flatness of the uncoated portion in the winding direction X. That is, swelling occurs due to the large height of the uncoated portion.

Additionally, the pitch C3 of the segments 61 may be adjusted in a range between 0.05 and 1 mm or between 0.5 mm and 1 mm. When C3 is less than 0.05 mm, the uncoated portion 43 near the notching valley may be torn by stress when bending the segments 61. In contrast, when the pitch C3 is larger than 1 mm, there may be an empty space (a gap) or an area with insufficient overlap of the segments 61 for ensuring adequate weld strength when the segments 61 are bent.

In an embodiment of the present disclosure, the corners of the two segments may be connected to each other in a straight line shape. That is, the bottom of the cutting groove may have a flat straight line shape extending in the winding direction X. A round reinforcement may be added to the corner A.

The radius r of the round reinforcement may be 0.02 mm or more. When the corresponding radius is more than the aforementioned range, the stress dissipation effect will be definitely exerted. The radius of the round reinforcement may be 0.1 mm or less. When the corresponding radius is more than 0.1 mm, the stress dissipation effect does not increase any longer, and the space near the bottom of the cutting groove reduces, resulting in poor electrolyte wetting.

Referring back to FIG. 7a, the width d_{B1} of the core-side uncoated portion B1 is designed in the condition that the cavity at the core of the electrode assembly is not blocked when the segments 61 of the intermediate uncoated portion B2 are bent toward the core.

In an example, the width d_{B1} of the core-side uncoated portion B1 may increase in proportion to the height C2 of the group 1 segments 61.

In a specific example, when the electrode plate 60 is used to manufacture an electrode assembly of a cylindrical cell with 46800 form factor, the width d_{B1} of the core-side uncoated portion B1 may be set to 180 to 350 mm according to the core diameter of the electrode assembly.

In an embodiment, the width of each segment group may be designed to form the same winding turn of the electrode assembly.

In a variation, the width and/or height and/or pitch of the segments 61 in the same segment group may increase or decrease gradually and/or stepwise and/or irregularly within the group.

Groups 1 to 7 are an example of the segment group. The number of groups and the number of segments 61 in each group may be adjusted so that the segments 61 overlap in multilayers to maximize stress dissipation during the bending of the uncoated portion 43 and ensure sufficient weld strength.

In another variation, in the same way as the first and second embodiments, the height of the outer circumference-side uncoated portion B3 may decrease gradually or stepwise. Additionally, the segment structure of the intermediate uncoated portion B2 may be extended to the outer circumference-side uncoated portion B3 (see the dashed line). In this case, in the same way as the intermediate uncoated portion B2, the outer circumference-side uncoated portion B3 may include a plurality of segments. In this case, the segments of the outer circumference-side uncoated portion B3 may be larger in width and/or height and/or pitch than the segments of the intermediate uncoated portion B2.

In a specific example, when the electrode plate 60 is used to manufacture an electrode assembly of a cylindrical cell with 46800 form factor, the segments may be formed into 8 groups. In this instance, the group 1 to 7 segments may be formed in the intermediate uncoated portion B2, and the group 8 segments may be formed in the outer circumference-side uncoated portion B3 in the same way as the above-described variation.

In a specific example, the width d_{B1} of the core-side uncoated portion B1 may be 180 to 350 mm. The width of group 1 may be 35 to 40% of the width of the core-side uncoated portion B1. The width of group 2 may be 130 to 150% of the width of group 1. The width of group 3 may be 120 to 135% of the width of group 2. The width of group 4 may be 85 to 90% of the width of group 3. The width of group 5 may be 120 to 130% of the width of group 4. The width of group 6 may be 100 to 120% of the width of group 5. The width of group 7 may be 90 to 120% of the width of group 6. The width of group 8 may be 115~130% of the width of group 7.

The width of groups 1 to 8 does not show a uniformly increasing or decreasing pattern because the width of the segments gradually increases from group 1 to group 8, but the number of segments in the group is limited to an integer. Accordingly, the number of segments in the specific segment group may decrease. Accordingly, the width of the group may have an irregular change as in the above example from the core to the outer circumference.

That is, when the width in the winding direction for each of three consecutive adjacent segment groups in the radial direction of the electrode assembly is W1, W2 and W3, the uncoated portion may include a combination of segment groups having W3/W2 that is smaller than W2/W1.

In the above-described specific example, groups 4 to 6 correspond to this. A width ratio of group 5 to group 4 is from 120 to 130%, and a width ratio of group 6 to group 5 is from 100 to 120%, i.e., the value is smaller than 120 to 130%.

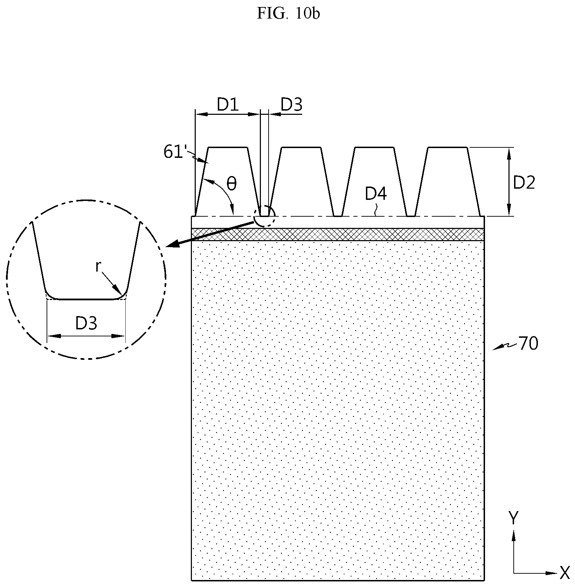

FIG. 10b shows the definition of the width, height and pitch of the trapezoidal segments 61'.

Referring to FIG. 10b, the width D1, height D2 and pitch D3 of the segments 61' are designed to prevent the uncoated portion D4 near the notching valley from tearing during the bending of the uncoated portion 43, adequately increase the number of overlapping layers of the uncoated portion 43 to ensure sufficient weld strength and prevent abnormal deformation of the uncoated portion 43.

Preferably, the width D1 of the segments 61' may be adjusted in a range between 1 and 6 mm. When D1 is less than 1 mm, there may be an empty space (a gap) or an area with insufficient overlap of the segments 61' for ensuring adequate weld strength when the segments 61' are bent toward the core. In contrast, when D1 is larger than 6 mm, due to the curvature of the wound electrode, the uncoated portion D4 near the notching valley may be torn by stress when bending the segments 61'. Additionally, the height of the segments 61' may be adjusted in a range between 2 mm and 10 mm. When D2 is less than 2 mm, the bending of the segments 61' may not be smoothly done or there may be an empty space (a gap) or an area with insufficient overlap of the segments 61' for ensuring adequate weld strength when the segments 61' are bent toward the core. In contrast, when D2 is larger than 10 mm, it is difficult to manufacture the electrode plate while uniformly maintaining the flatness of the uncoated portion 43 in the winding direction. Additionally, the pitch D3 of the segments 61' may be adjusted in a range between 0.05 and 1 mm or between 0.5 mm and 1 mm. When D3 is less than 0.05 mm, the uncoated portion D4 near the notching valley may be torn by stress when bending the segments 61'. In contrast, when D3 is larger than 1 mm, there may be an empty space (a gap) or an area with insufficient overlap of the segments 61' for ensuring adequate weld strength when the segments 61' are bent.

When the segments are trapezoidal in shape, the pitch D3 may be defined as a distance between the corners of two adjacent segments 61'. The corners of the two adjacent segments may be connected to each other in a straight line shape. That is, the bottom of the cutting groove may have a flat straight line shape extending in the winding direction X.

The round reinforcement may be further provided to the corner. Accordingly, it may be possible to mitigate the stress concentration that may occur at the corner.

The radius r of the round reinforcement may be 0.02 mm or more. When the corresponding radius is more than the aforementioned range, the stress dissipation effect may be definitely exerted.

The radius of the round reinforcement may be 0.1 mm or less. When the corresponding radius is more than 0.1 mm, the stress dissipation effect does not increase any longer, and the space near the bottom of the cutting groove reduces, resulting in poor electrolyte wetting.

The pitch C3, D3 may be determined in relation to the size C1, D1 of the width measured in the winding direction of the adjacent segments 61, 61' that define the pitch. For example, as the width of the segments in the winding direction increases, the pitch between the segments preferably tends to increase. Accordingly, it may be possible to achieve uniform electrolyte wetting distribution along the winding direction of the electrode assembly.

The width of the segments in the winding direction may be set to gradually increase from the core of the electrode assembly toward the outer circumference. The width of the segments in the winding direction may increase gradually or stepwise from the core of the electrode assembly toward the outer circumference. For example, the width C1, **D1** of the segments in the winding direction may be in a range between 1 and 6 mm, and may decrease toward the core and increase toward the outer circumference.

Accordingly, the pitch C3, D3 may be in a range between 0.5 and 1 mm, and may increase gradually or stepwise from the core of the electrode assembly toward the outer circumference.

In the fifth embodiment, the plurality of segments 61' may have an increasing lower interior angle θ of the trapezoid from the core to the outer circumference. When the radius of the electrode assembly increases, the curvature increases. When the lower interior angle θ of the segments 61' increases with the increasing radius of the electrode assembly, it may be possible to mitigate stress that occurs in the radial direction and the circumferential direction when bending the segments 61'. Additionally, as the lower interior angle θ increases, when the segments 61' are bent, the overlapping area with the inner segments 61' and the number of overlapping layers increases together, so it may be possible to ensure the uniform weld strength in the radial direction and the circumferential direction and form the flat bent surface.

In an example, in the case where the electrode plate 70 is used to manufacture an electrode assembly of a cylindrical cell with 46800 form factor, when the radius of the electrode assembly increases from 4 mm to 22 mm, the interior angle of the segments 61' may increase stepwise in a range between 60° and 85°.

In a variation, in the same way as the first and second embodiments, the height of the outer circumference-side uncoated portion B3 may decrease gradually or stepwise. Additionally, the segment structure of the intermediate uncoated portion B2 may be extended to the outer circumference-side uncoated portion B3 (see the dashed line). In this case, in the same way as the intermediate uncoated portion B2, the outer circumference-side uncoated portion B3 may include a plurality of segments. In this case, the segments of the outer circumference-side uncoated portion B3 may be larger in width and/or height and/or pitch than the intermediate uncoated portion B2.

As in the fourth and fifth embodiments, when the intermediate uncoated portion B2 includes the plurality of segments 61, 61' , the shape of each segment 61, 61' may be changed to a triangular shape, a semicircular shape, a half oval or ellipse shape, a parallelogram shape, or any other shape.

Additionally, the shape of the segments 61, 61' may be differently changed according to the area of the intermediate uncoated portion B2. In an example, stress concentrated regions may have a round shape (for example, a semicircular shape, a half oval or ellipse shape) that is advantageous for stress dissipation, and less stressed regions may have a polygonal shape (for example, a square or rectangular shape, a trapezoidal shape, a parallelogram shape) that is as wide as possible.

In the fourth and fifth embodiments, the segment structure of the intermediate uncoated portion B2 may be also applied to the core-side uncoated portion B1. However, when the segment structure is applied to the core-side uncoated portion B1, reverse forming may occur, i.e., a phenomenon that the end of the core-side uncoated portion B1 bends toward the outer circumference when bending the segments 61, 61' of the intermediate uncoated portion B2 according to the curvature of the core. Accordingly, preferably, the core-side uncoated portion B1 has no segment structure, or even though the core-side uncoated portion B1 has the segment structure, it is preferable to adjust the width and/or height and/or pitch of the segments 61, 61', taking the curvature of the core into account, in order to avoid reverse forming.

When the height of the segments is less than approximately 3 mm, reverse forming may occur. Additionally, when the height of the segments is less than 2 mm, interference of the segments and the separator may occur, which impedes bending. Furthermore, when the height of the segments is less than 4 mm, the process of welding the segments may not be smoothly performed. Accordingly, considering the bending, the minimum height Hₘᵢₙ of the segments may be 2 mm or more, or 3 mm or more, or 4 mm or more, or 5 mm or more. Accordingly, the height of the minimum bent segment may be 2 mm or more, or 3 mm or more, or 4 mm or more, or 5 mm or more.

Accordingly, when the second side of the separator is present in a range of ±30% of the height Ha of the minimum bent segment among the segments having the height that is equal to or larger than the minimum bendable height Hₘᵢₙ in the uncoated portion (for example, 2 mm or 3 mm or 4 mm or 5 mm), wetting may be significantly enhanced. That is, in determining the smallest segment that defines the location of the end SL of the separator in the width direction, segments having a reverse forming risk or unbent segments may be excluded.

Describing from another perspective, when the second side of the separator is present in a range of ±30% of a larger one, {max(Ha, Hₘᵢₙ)} of the height Ha of the minimum bent segment present in the uncoated portion and the minimum bendable height Hₘᵢₙ, wetting may be significantly enhanced.

Describing from another perspective, when the second side of the separator is located in a range of ±30% of the minimum bendable height Hₘᵢₙ, electrolyte wetting may be significantly enhanced. It may be in a range of boundary (boundary between the uncoated portion and the electrode active material portion)±1.5 mm, or boundary±1.2 mm, or boundary±0.9 mm, or boundary±0.6 mm.

Alternatively, the location of the second side of the separator may be present in a range of boundary±0.3Ha and also in a range of boundary±1.5mm, or the location of the second side of the separator may be present in a range of boundary±0.3Ha and also in a range of boundary±1.2mm, or the location of the second side of the separator may be present in a range of boundary±0.3Ha and also in a range of boundary±0.9mm, or the location of the separator the second side may be present in a range of boundary±0.3Ha and also in a range of boundary±0.6mm.

In the above-described embodiments (variations), the first electrode plate may be a positive electrode plate and the second electrode plate may be a negative electrode plate. Alternatively, the first electrode plate may be a negative electrode plate and the second electrode plate may be a positive electrode plate. In a specific embodiment of the present disclosure, the first electrode plate is a positive electrode plate and the second electrode plate is a negative electrode plate.

In the present disclosure, the positive electrode active material coated on the positive electrode plate and the negative electrode active material coated on the negative electrode plate may include any active material known in the art without limitation.

The positive electrode active material may include, as the major component, lithium intercalation materials such as layered compounds such as lithium cobalt oxide (LiCoO₂), lithium nickel oxide (LiNiO₂) or compounds with one or more transition metal substitution; lithium manganese oxide (LiMnO₂) of Chemical Formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiFe₃O₄, V₂O₅, Cu₂V₂O₇; N site type lithiated nickel oxide represented by Chemical Formula LiNi₁₋ₓMₓO₂ (where M = Co, Mn, Al, Cu, Fe, Mg, B or Ga, x = 0.01 to 0.3); lithium manganese composite oxide represented by Chemical Formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); LiMn₂O₄ with partial substitution of alkaline earth metal ions for lithium in the Formula; disulfide compounds; Fe₂(MoO₄)₃ or composite oxide thereof, but is not limited thereto.

The positive electrode current collector may be, for example, 3 to 500 *µ*m in thickness. The positive electrode current collector is not limited to a particular type and may include those having conductive properties without causing any chemical change in the battery, for example, stainless steel, aluminum, nickel, titanium, sintered carbon, or aluminum or stainless steel treated with carbon, nickel, titanium or silver on the surface. The electrode current collector may have microtexture on the surface to increase the adhesion strength of the positive electrode active material, and may come in various forms, for example, a film, a sheet, a foil, a net, a porous body, a foam, a nonwoven.

The positive electrode active material particles may further include a conductive material. The conductive material is, for example, added in an amount of from 1 to 50 wt% based on the total weight of the mixture including the positive electrode active material. The conductive material is not limited to a particular type and may include those having high conductivity without causing any chemical change in the battery, for example, graphite such as natural graphite, artificial graphite; carbon black such as carbon black, acetylene black, Ketjen black, channel black, furnace black, lamp black, thermal black; conductive fibers such as carbon fibers, metal fibers; fluoro carbon, metal powder such as aluminum powder, nickel powder; conductive whiskers such as zinc oxide, potassium titanate; conductive oxide such as titanium oxide; conductive materials such as polyphenylene derivatives.

Meanwhile, in the present disclosure, the negative electrode plate is fabricated by coating the negative electrode active material particles on the negative electrode current collector and drying, and if necessary, may further include a conductive material, a binder and a solvent as described above.

The negative electrode current collector may be, for example, 3 to 500 *µ*m in thickness. The negative electrode current collector is not limited to a particular type and may include those having conductive properties without causing any chemical change in the corresponding battery, for example, copper, stainless steel, aluminum, nickel, titanium, sintered carbon, copper or stainless steel treated with carbon, nickel, titanium or silver on the surface and aluminum-cadmium alloys. Additionally, in the same way as the positive electrode current collector, the negative electrode current collector may have microtexture on the surface to increase the bonding strength of the negative electrode active material, and may come in various forms, for example, a film, a sheet, a foil, a net, a porous body, a foam, a nonwoven.

The negative electrode active material may include, for example, carbon such as nongraphitizing carbon, graphite-based carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon-based alloys; tin-based alloys; oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅; conductive polymers such as polyacetylene; Li-Co-Ni based materials.

The binder polymer that may be used in the electrode is the component that helps to bind the electrode active material particles with the conductive material and with the electrode current collector, and for example, is added in an amount of from 1 to 50 wt% based on the total weight of the mixture including the electrode active material. The binder polymer may include, for example, any one selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxymethyl cellulose or a mixture thereof, but is not limited thereto.

Non-limiting examples of the solvent used to manufacture the electrode may include acetone, tetrahydrofuran, methylene chloride, chloroform, dimethylformamide, N-methyl-2-pyrrolidone (NMP), cyclohexane, water or a mixture thereof. These solvents may provide an appropriate level of viscosity to form a slurry coating layer at a desired level on the surface of the electrode current collector.

The negative electrode plate includes the current collector; and the negative electrode active material portion of a predetermined thickness on at least one surface of the current collector and including the negative electrode active material, the binder polymer and the conductive material, wherein the negative electrode active material portion may include a lower layer region that contacts the current collector and an upper layer region that contacts the lower layer region and in which the negative electrode active material portion is extended to the surface, and each of the lower region and the upper region may independently include at least one of graphite or a silicon-based compound as the negative electrode active material.

The lower layer region may include natural graphite as the negative electrode active material, and the upper layer region may include artificial graphite as the negative electrode active material.

Each of the lower layer region and the upper layer region may, independently, further include a silicon-based compound as the negative electrode active material.

The silicon-based compound may include at least one of SiOx (0≤x≤2) or SiC.

According to an embodiment of the present disclosure, the negative electrode may be manufactured by coating a slurry for the lower layer including the negative electrode active material for the lower layer on the current collector and drying the slurry to form the lower layer region, and subsequently, coating a slurry for the upper layer including the negative electrode active material for the upper layer on the lower layer region and drying the slurry to form the upper layer region.

Additionally, according to an embodiment of the present disclosure, the negative electrode may be manufactured by a method including the steps of: preparing the slurry for the lower layer including the negative electrode active material for the lower layer and the slurry for the upper layer including the negative electrode active material for the upper layer; coating the slurry for the lower layer on one surface of the negative electrode current collector, and coating the slurry for the upper layer on the slurry for the lower layer at the same time or at a predetermined time interval; and drying the coated slurry for the lower layer and the coated slurry for the upper layer at the same time to form the active material portion.

When the latter method is used to manufacture, an intermixing region in which the different types of active materials mix together may exist at the interface between the lower layer region and the upper layer region in the negative electrode. When the slurry for the lower layer including the negative electrode active material for the lower layer and the slurry for the upper layer including the negative electrode active material for the upper layer are continuously coated on the current collector at the same time or at a very short time interval and dried at the same time to form the active material portion, the slurry for the lower layer and the slurry for the upper layer mix together at the interface before they get dry and after drying, the intermixing region is formed in a layer form.

**In** the active material portion of the negative electrode of an embodiment of the present disclosure, a weight ratio (or a ratio of loading amount per unit area) of the upper layer region and the lower layer region may be from 20:80 to 50:50, specifically from 25:75 to 50:50.

The thickness of the lower layer region and the upper layer region of the active material portion of the negative electrode of the present disclosure may not completely match the thickness of the coated slurry for the lower layer and the coated slurry for the upper layer. However, after the drying or selective rolling process, a ratio of thickness of the lower layer region and the upper layer region of the negative electrode active material portion of the negative electrode of the present disclosure as finally obtained may match a ratio of thickness of the coated slurry for the lower layer and the coated slurry for the upper layer.

The first slurry is coated, and the second slurry is coated on the first slurry at the same time or the predetermined time interval, and according to an embodiment of the present disclosure, the predetermined time interval may be 0.6 sec or less, or from 0.02 sec to 0.6 sec, or from 0.02 sec to 0.06 sec, or from 0.02 sec to 0.03 sec. The time interval in the coating of the first slurry and the second slurry is attributed to the coater, and it may be more preferable to coat the first slurry and the second slurry at the same time. The coating method of the second slurry on the first slurry may use a double slot die.

The step of forming the active material layer may further include the step of rolling the active material portion after the drying step. **In** this instance, the rolling may be performed by methods commonly used in the art such as roll pressing, and for example, may be performed under the pressure of from 1 MPa to 20 MPa at the temperature of from 15°C to 30°C.

The step of forming the active material portion by drying the coated slurry for the lower layer and the coated slurry for the upper layer at the same time may be performed using a combination of a hot air dryer and an infrared dryer by methods commonly used in the art.

wt% of the first binder polymer in the solids of the slurry for the lower layer may be equal to or larger than wt% of the second binder polymer in the solids of the slurry for the upper layer. According to an embodiment of the present disclosure, wt% of the first binder polymer in the solids of the slurry for the lower layer may be 1.0 to 4.2 times, or 1.5 to 3.6 times, or 1.5 to 3 times larger than wt% of the second binder polymer in the solids of the slurry for the upper layer.

**In** this instance, when the ratio of wt% of the first binder in the coated slurry for the lower layer and wt% of the second binder in the coated slurry for the upper layer satisfies the aforementioned range, the amount of the binder of the lower layer region is not too low, so peel-off of the electrode layer does not occur, and the amount of the binder of the upper layer region is not too high, so the resistance of the upper part of the electrode reduces and fast charging performance may improve.

wt% of the first binder polymer in the solids of the slurry for the lower layer may be from 2 to 30 wt%, or from 5 to 20 wt%. or from 5 to 20 wt%, and the percent (wt%) of the second binder polymer in the solids of the slurry for the upper layer may be from 0.5 to 20 wt%, or from 1 to 15 wt%, or from 1 to 10 wt%, or from 2 to 5 wt%.

The total percent (wt%) of the first binder polymer and the second binder polymer in the total solids of the slurry for the lower layer and the slurry for the upper layer may be from 2 to 20 wt%, or from 5 to 15 wt%.

The separator has a porous polymer substrate; and a porous coating layer on at least one surface or two surfaces of the porous polymer substrate, the porous coating layer including inorganic particles and a binder polymer.

The porous polymer substrate may be a polyolefin-based porous substrate.

The polyolefin-based porous substrate may be in a form of a film or a non-woven web. With the porous structure, it may be possible to achieve smooth movement of the electrolyte solution between the positive electrode and the negative electrode, increase the electrolyte wetting of the substrate itself to ensure high ionic conductivity, and prevent the increase in internal resistance of the electrochemical device to prevent performance degradation of the electrochemical device.

The polyolefin porous substrate used in the present disclosure may include any planar porous substrate commonly used in electrochemical devices, and its material or shape may be variously selected according to the purpose.

Non-limiting examples of the polyolefin porous substrate may include films or non-woven webs of high density polyethylene, low density polyethylene, linear low density polyethylene, ultrahigh molecular weight polyethylene, polypropylene or a mixture thereof, but is not limited thereto.

The polyolefin porous substrate may be 8 to 30 µm in thickness, but this is provided by way of example, and thicknesses outside of the aforementioned range may be used in view of the mechanical properties or high rate charge and discharge characteristics of the battery.

The non-woven sheet according to the present disclosure may be formed from polyethylene (PE), polypropylene (PP) or a mixture thereof. For example, the non-woven sheet may be made by fiber spinning. For example, the non-woven sheet may be made by interlacing melt-spun fibers of the above-described material produced by melt blowing at or above the melting point.

The non-woven sheet may have elongation of from 200 to 400%, more preferably from 300 to 400%. When the elongation is less than 200%, in the event that a nail penetrates the battery, the contact probability between the electrodes increases, and when the elongation is more than 400%, the area adjacent to the nail penetrated area is also stretched, the separator becomes thinner and a barrier reduces.

The non-woven sheet has a plurality of pores having the average diameter of from 0.1 to 10 µm. When the pore size is smaller than 0.1 µm, smooth movement of lithium ions and/or the electrolyte solution may not be achieved, and when the pore size is larger than 10 µm, it may fail to achieve the effect of the present disclosure to prevent the contact between the positive electrode and the negative electrode by the stretch of the non-woven sheet in the event that the nail penetrates the battery.

Additionally, the non-woven sheet may have porosity of from 40 to 70%. When the porosity is less than 40%, smooth movement of lithium ions and/or the electrolyte solution may not be achieved, and when the porosity is more than 70%, it may fail to achieve the effect of the present disclosure to prevent the contact between the positive electrode and the negative electrode by the stretch of the non-woven sheet in the event that the nail penetrates the battery. The non-woven sheet may have air permeability of from 1 to 20 sec/100 mL.

Additionally, the non-woven sheet may be 10 to 20 µm in thickness, but this is provided by way of example, and the thickness is not limited to the aforementioned range. The non-woven sheet having thicknesses outside of the aforementioned may be used according to the permeability of the non-woven sheet.

The non-woven sheet may be coupled to the components of the separator below the non-woven sheet by lamination. The lamination may be performed in a temperature range between 100°C and 150°C, and when the lamination is performed below 100°C, the lamination effect does not occur, and when the lamination is performed above 150°C, parts of the non-woven fabric melt.

The separator according to an embodiment of the present disclosure, coupled by the lamination under the above-described conditions has improved resistance to nail penetration when compared with the conventional separator of the non-woven sheet and the separator having the layer including the inorganic particles on at least one surface of the film or the non-woven sheet.

The inorganic particles packed in contact with each other in the porous coating layer may be held together by the binder polymer to form interstitial volume between the inorganic particles and the interstitial volume between the inorganic particles may become empty spaces that will form pores.

The inorganic particles used to form the porous coating layer may further include inorganic particles, i.e., inorganic particles in which oxidation and/or reduction reaction does not occur in the operating voltage range (for example, 0 to 5V vs Li/Li+) of the electrochemical device. In particular, the use of inorganic particles having the ability to transport ions may contribute to the increased ionic conductivity in the electrochemical device and improved performance. Additionally, the use of high dielectric constant inorganic particles as the inorganic particles contributes to the increased degree of dissociation of an electrolyte salt, for example, a lithium salt in a liquid electrolyte, thereby improving the ionic conductivity of the electrolyte solution.

By the above-described reasons, the inorganic particles may include high dielectric constant inorganic particles having the dielectric constant of 5 or more, preferably the dielectric constant of 10 or more, inorganic particles having the ability to transport lithium ions and a combination thereof.

Non-limiting examples of the inorganic particles having the dielectric constant of 5 or more may include BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, aluminum hydroxide such as boehmite (γ-AlO(OH)), pseudo-boehmite (Al₂O₃ • H₂O), diaspore (α-AlO(OH)), bayerlite (α-AlO(OH)₃), gibbsite (γ-AlO(OH)₃), nordstrandite (AlO(OH)₃) or a mixture thereof.

In particular, the inorganic particles such as BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT) and hafnia (HfO₂) as described above may exhibit high dielectric constant characteristics having the dielectric constant of 100 or more, and have piezoelectricity where a potential difference occurs between two surfaces due to electric charges generated when stretched or compressed by the application of a predetermined pressure, thereby preventing internal short circuit of the two electrodes in the event of external impacts, which contributes to the improved safety of the electrochemical device. Additionally, when the high dielectric constant inorganic particles and the inorganic particles having the ability to transport lithium ions as described above are used together, their synergistic effect may be magnified.

The inorganic particles having the ability to transport lithium ions refer to inorganic particles that contain but do not store lithium and have the function of transporting lithium ions. Because the inorganic particles having the ability to transport lithium ions can transport and deliver lithium ions by a sort of defect present in the particle structure, it may be possible to improve the conduction of lithium ions in the battery, thereby contributing to the improved battery performance. Non-limiting examples of the inorganic particles having the ability to transport lithium ions may include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0 < x < 2, 0 < y < 1, 0 < z < 3), (LiAlTiP)ₓO_{y} based glass (0 < x < 4, 0 < y < 13) such as 14Li₂O-9Al₂O₃-38TiO₂-39P₂O₅, lithium lanthanum titanate (LiₓLa_{y}TiO₃, 0< x < 2, 0 < y < 3), lithium germanium thiophosphate (LiₓGe_{y}P_{z}S_{w}, 0 < x < 4, 0 < y <1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂ based glass (LiₓSi_{y}S_{z}, 0 < x < 3, 0 < y < 2, 0 < z < 4) such as Li₃PO₄-Li₂S-SiS₂, P₂S₅ based glass (LiₓP_{y}S_{z}, 0 < x < 3, 0 < y < 3, 0 < z < 7) such as LiI-Li₂S-P₂S₅ or a mixture thereof.

In an embodiment of the present disclosure, the inorganic particles may include inorganic particles having hydrophilic properties. The inorganic particles having hydrophilic properties may include, for example, Al₂O₃ or aluminum hydroxide-based inorganic particles, and the aluminum hydroxide-based inorganic particles may include, for example, boehmite (γ-AlO(OH)), pseudo-boehmite (Al₂O₃ • H₂O), diaspore (α-AlO(OH)), bayerlite (α-AlO(OH)₃), gibbsite (γ-AlO(OH)₃) and nordstrandite (AlO(OH)₃). In the present disclosure, the separator may include at least one type of inorganic particles having hydrophilic properties. In particular, when a hydrophilic organic solvent such as a carbonate-based organic solvent is used as the organic solvent for the electrolyte solution, the use of the inorganic particles having hydrophilic properties in the porous coating layer of the separator may further improve the electrolyte wetting of the electrode assembly. In an embodiment of the present disclosure, when the polyolefin-based separator substrate is used, because the separator substrate exhibits hydrophobic properties, it may be difficult to ensure sufficient electrolyte wetting. In this instance, when the inorganic particles having hydrophilic properties are applied to the porous coating layer on the surface, it may be possible to prevent low wetting of the separator by the hydrophobic properties of the polyolefin-based separator substrate. The particle size of the inorganic particles of the porous coating layer is not limited to a particular range, but may be preferably from 0.001 to 10 *µ*m to form the coating layer of uniform thickness and achieve the optimal porosity. When the particle size is less than 0.001 *µ*m, it may result in poor dispersion of the inorganic particles, and when the particle size is more than 10 *µ*m, the thickness of the porous coating layer increases and the mechanical properties decrease, and due to the overly large pores, there is a high probability that internal short circuits will occur during charging/discharging of the battery.

The binder polymer that forms the porous coating layer may include any one selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxymethyl cellulose or a mixture thereof, but is not limited thereto.

A composition ratio of the inorganic particles to the binder polymer in the porous coating layer is preferably, for example, in a range between 50:50 and 99:1, and more preferably between 70:30 and 95:5. When the ratio of the inorganic particles to the binder polymer is less than 50:50, the amount of the binder polymer increases and thermal safety improvement of the separator may decrease. Additionally, the interstitial volume between the inorganic particles reduces, and the pore size and porosity reduce, and as a consequence, the battery performance may degrade. When the amount of the inorganic particles is more than 99 parts by weight, because the amount of the binder polymer is too low, the peel-off resistance of the porous coating layer may become weaker. The thickness of the porous coating layer is not limited to a particular range, but is preferably in a range between 0.01 and 20 *µ*m. Additionally, the pore size and porosity are not limited to a particular range, but the pore size is preferably in a range between 0.001 and 10 *µ*m, and the porosity is preferably in a range between 10 and 90%. The pore size and porosity rely primarily on the size of the inorganic particles, and when the inorganic particles having the particle size of, for example, 1 *µ*m or less are used, the formed pores are also approximately 1 *µ*m or less in size. The pore structure is filled with the electrolyte solution that will be injected later, and the filled electrolyte solution plays a role in transporting ions. When the pore size is less than 0.001 *µ*m and the porosity is less than 10%, the porous coating layer may act as a resistance layer, and when the pore size is more than 10 *µ*m and the porosity is more than 90%, the mechanical properties may decrease.

The porous coating layer may be formed by dissolving or dispersing the binder polymer in a dispersion medium, adding the inorganic particles to prepare a slurry for forming the porous coating layer, coating the slurry on at least one surface of the substrate and drying the slurry. The dispersion medium preferably has the similar solubility index to the binder polymer to be used and low boiling point. This is to ensure homogeneity in mixing and make it easy to remove the dispersion medium afterward. Non-limiting examples of available dispersion media may include acetone, tetrahydrofuran, methylene chloride, chloroform, dimethylformamide, N-methyl-2-pyrrolidone (NMP), cyclohexane, water or a mixture thereof.

It is preferable to grind the inorganic particles after adding the inorganic particles to the dispersion in which the binder polymer is dispersed in the dispersion medium. In this instance, the grinding time is preferably from 1 to 20 hours, and the particle size of the ground inorganic particles is preferably from 0.001 to 10 *µ*m as described above. The commonly used methods may be used to grind, and in particular, ball milling is preferred.

Subsequently, the binder polymer dispersion containing the dispersed inorganic particles is coated and dried on at least one surface of the porous polymer substrate in the humidity condition of from 10 to 80%. The coating method for coating the dispersion on the porous polymer substrate may include known coating methods commonly used in the art, for example, dip coating, die coating, roll coating, comma coating or a combination thereof.

In addition to the inorganic particles and the binder polymer, the porous coating layer may further include an additive, for example, a conductive material.

The separator finally fabricated according to the present disclosure may be from 1 to 100 *µ*m, or from 5 to 50 *µ*m in thickness. When the thickness is less than 1 *µ*m, the function of the separator is not adequately exerted, causing degradation in mechanical properties, and when the thickness is more than 100 *µ*m, the characteristics of the battery may degrade during high rate charging and discharging. Additionally, the separator may have porosity of from 40 to 60%, and air permeability of from 150 to 300 sec/100 mL.

According to an embodiment of the present disclosure, the porous polymer substrate may include polyethylene or polypropylene based materials. Additionally, in the porous coating layer, the inorganic particles may include Al oxide or Si oxide based coating materials.

When the separator according to an embodiment of the present disclosure is used, because the porous polymer substrate has the porous coating layer on two sides, a uniform solid electrolyte interphase (SEI) layer may be formed by improved electrolyte wetting performance, and it may be possible to ensure higher air permeability than the conventional separator having the inorganic coating layer on one surface. For example, the air permeability may be equal to or less than 120s/100cc. Additionally, the inorganic porous coating layer formed on two surfaces may be at the thickness level of the conventional separator having the inorganic coating layer on one surface. For example, the thickness may be equal to or less than 15.0 *µ*m.

Additionally, when the separator according to an embodiment of the present disclosure is used, it may be possible to improve stability of the separator, thereby ensuring heat resistance and compression resistance characteristics. Specifically, it may be possible to ensure heat resistance characteristics having thermal shrinkage characteristics of 5% or less on the basis of 180°C, ensure the puncture strength of 550 gf or more, and prevent the separator from being damaged or punctured at the step portion when core deformation occurs during cycling of the battery using the separator.

Hereinafter, the structure of the electrode assembly according to an embodiment of the present disclosure will be described in detail.

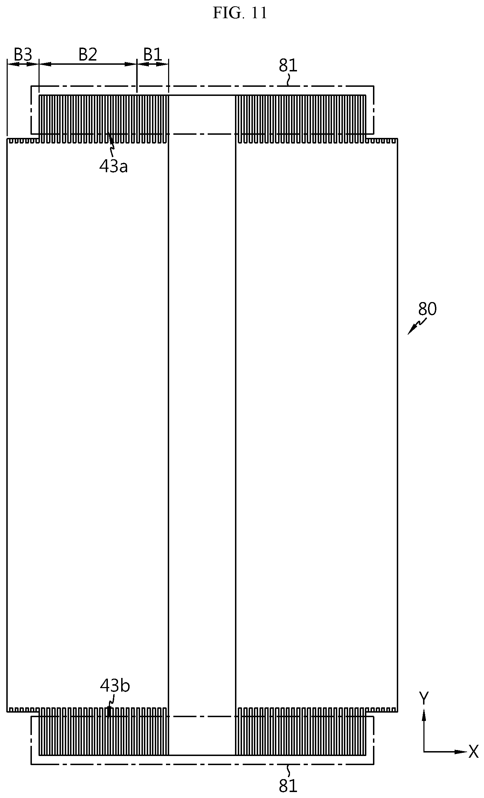

FIG. 11 is a cross-sectional view of the jellyroll-type electrode assembly 80 according to an embodiment of the present disclosure, taken along the Y axis direction (the winding axis direction).

The electrode assembly 80 may be made by the winding process described through FIG. 2. For convenience of description, the protruding structure of the uncoated portions 43a, 43b extended beyond the separator is shown in detail, and the illustration of the winding structure of the first electrode plate, the second electrode plate and the separator is omitted. In FIG. 11, the uncoated portion 43a protruding upward may be extended from the first electrode plate, and the uncoated portion 43b protruding downward may be extended from the second electrode plate.

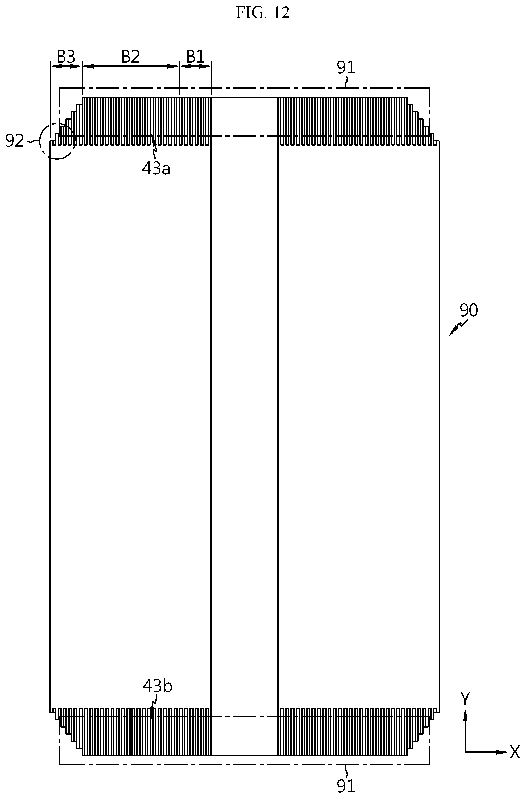

FIGs. 12 to 16 schematically show a height changing pattern of the uncoated portions 43a, 43b. That is, the height of the uncoated portions 43a, 43b may irregularly change depending on the location at which the cross section is taken. For example, when the side portions of the trapezoidal segments 61, 61' are cut, the height of the uncoated portion in the cross section is smaller than the height of the segments 61, 61'. Accordingly, the height of the uncoated portions 43a, 43b shown in the drawings depicting the cross section of the electrode assembly should be understood as corresponding to the average of the uncoated portion heights (C2 in FIG. 10a, D2 in FIG. 10b) included in each winding turn.

Referring to FIG. 11, the uncoated portion 43a of the first electrode plate includes the core-side uncoated portion B1 adjacent to the core of the electrode assembly 80, the outer circumference-side uncoated portion B3 adjacent to the outer circumference surface of the electrode assembly 80, and the intermediate uncoated portion B2 between the core-side uncoated portion B1 and the outer circumference-side uncoated portion B3.

Here, the height (length in the Y axis direction) of the outer circumference-side uncoated portion B3 is smaller than the height of the intermediate uncoated portion B2. Accordingly, it may be possible to prevent internal circuit shorts that occurs when the outer circumference-side uncoated portion B3 is pressed against the beading portion of the battery can.

Here, the lower uncoated portion 43b has the same structure as the upper uncoated portion 43a. In a variation, the lower uncoated portion 43b may have the conventional electrode plate structure or the electrode plate structure of other embodiments (variations).

Additionally, the end portion 81 of the upper uncoated portion 43a and the lower uncoated portion 43b may be bent from the outer circumference of the electrode assembly 80 toward the core. In this instance, the outer circumference-side uncoated portion B3 may be substantially unbent.

FIG. 12 is a cross-sectional view of the jellyroll-type electrode assembly 90 including the first electrode plate and the second electrode plate using the electrode plate 45 of the second embodiment, taken along the Y axis direction (the winding axis direction).

Referring to FIG. 12, the uncoated portion 43a of the first electrode plate includes the core-side uncoated portion B1 adjacent to the core of the electrode assembly 90, the outer circumference-side uncoated portion B3 adjacent to the outer circumference surface of the electrode assembly 90, and the intermediate uncoated portion B2 between the core-side uncoated portion B1 and the outer circumference-side uncoated portion B3.

Here, the height of the outer circumference-side uncoated portion B3 is smaller than the height of the intermediate uncoated portion B2 and decreases gradually or stepwise from the core toward the outer circumference. Accordingly, it may be possible to prevent internal circuit shorts that occur when the outer circumference-side uncoated portion B3 is pressed against the beading portion of the battery can.

Here, the lower uncoated portion 43b has the same structure as the upper uncoated portion 43a. In a variation, the lower uncoated portion 43b may have the conventional electrode plate structure or the electrode plate structure of other embodiments (variations). Additionally, the end portion 91 of the upper uncoated portion 43a and the lower uncoated portion 43b may be bent from the outer circumference of the electrode assembly 90 toward the core. In this instance, the outermost side 92 of the outer circumference-side uncoated portion B3 may be substantially unbent.

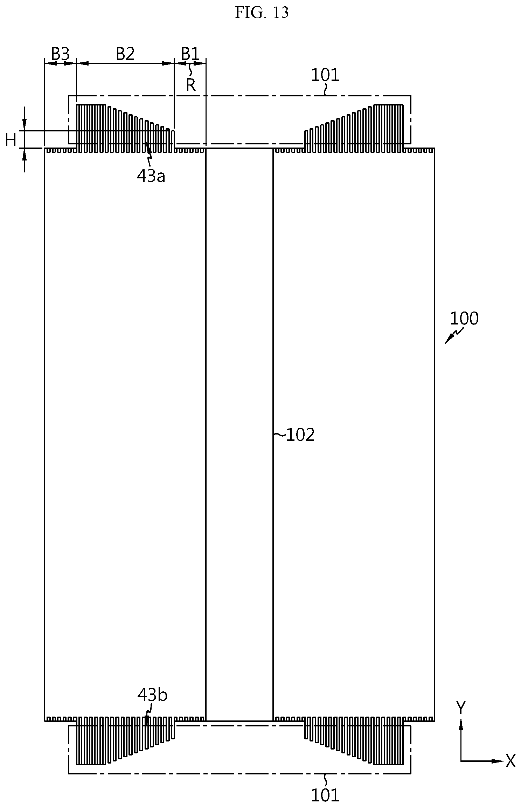

FIG. 13 is a cross-sectional view of the jellyroll-type electrode assembly 100 including the first electrode plate (the positive electrode plate) and the second electrode plate (the negative electrode plate) using any one of the electrode plates 50, 60, 70 of the third to fifth embodiments (variations), taken along the Y axis direction (the winding axis direction).

Referring to FIG. 13, the uncoated portion 43a of the first electrode plate includes the core-side uncoated portion B1 adjacent to the core of the electrode assembly 100, the outer circumference-side uncoated portion B3 adjacent to the outer circumference surface of the electrode assembly 100, and the intermediate uncoated portion B2 between the core-side uncoated portion B1 and the outer circumference-side uncoated portion B3.

Here, the height of the core-side uncoated portion B1 is smaller than the height of the intermediate uncoated portion B2. Additionally, the length of the innermost uncoated portion 43a in the intermediate uncoated portion B2 is equal to or smaller than the radial length R of the core-side uncoated portion B1. Accordingly, when the intermediate uncoated portion B2 is bent, the bent part does not block the cavity 112 at the core of the electrode assembly 110. When the cavity 112 is not blocked, there is no difficulty in the electrolyte injection process, and the electrolyte solution injection efficiency improves. Additionally, it may be possible to easily perform the welding process between the current collector plate of the negative electrode and the battery can by inserting the welding jig through the cavity 112.

Additionally, the height of the outer circumference-side uncoated portion B3 is smaller than the height of the intermediate uncoated portion B2. Accordingly, it may be possible to prevent internal circuit shorts that occur when the outer circumference-side uncoated portion B3 is pressed against the beading portion of the battery can.

In a variation, unlike FIG. 13, the height of the outer circumference-side uncoated portion B3 may decrease gradually or stepwise. Additionally, in FIG. 13, the height of the intermediate uncoated portion B2 in part of the outer circumference is equal, but the height of the intermediate uncoated portion B2 may increase gradually or stepwise from the boundary between the core-side uncoated portion B1 and the intermediate uncoated portion B2 to the boundary between the intermediate uncoated portion B2 and the outer circumference-side uncoated portion B3.

Here, the lower uncoated portion 43b has the same structure as the upper uncoated portion 43a. In a variation, the lower uncoated portion 43b may have the conventional electrode plate structure or the electrode plate structure of other embodiments (variations).

Here, the end portion 101 of the upper uncoated portion 43a and the lower uncoated portion 43b may be bent from the outer circumference of the electrode assembly 100 toward the core. In this instance, the core-side uncoated portion B1 and the outer circumference-side uncoated portion B3 are substantially unbent.

Here, when the intermediate uncoated portion B2 includes the plurality of segments, it may be possible to mitigate bending stress, thereby preventing tearing or abnormal deformation of the notching valley part of the uncoated portion 43. Additionally, when the width and/or height and/or pitch of the segments is adjusted according to the numerical range of the above-described embodiment, the segments overlap in multilayers enough to ensure the weld strength when the segments are bent toward the core and an empty hole (a gap) is not formed on the bent surface (surface viewed from the Y axis).

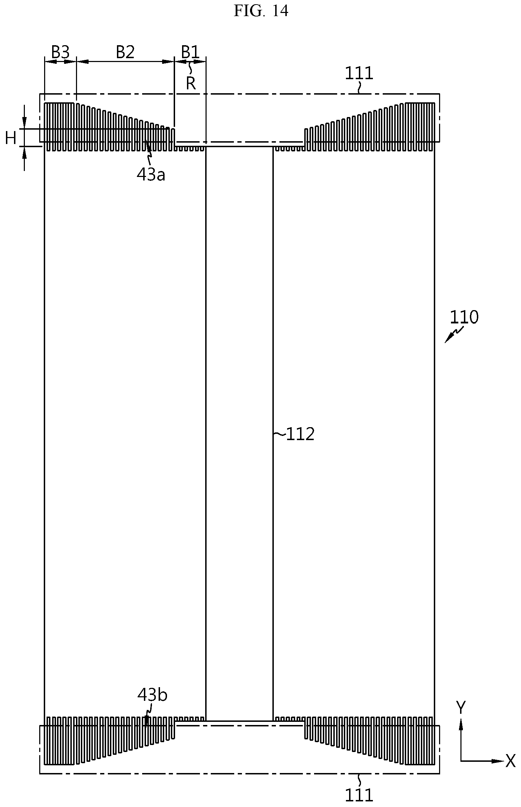

FIG. 14 is a cross-sectional view of the electrode assembly 110 according to another embodiment of the present disclosure, taken along the Y axis direction (the winding axis direction).

Referring to FIG. 14, the electrode assembly 110 is substantially the same as the electrode assembly 100 of FIG. 13 except that the height of the outer circumference-side uncoated portion B3 is substantially equal to the outermost height of the intermediate uncoated portion B2.

The outer circumference-side uncoated portion B3 may include the plurality of segments. For details of the plurality of segments, the description of the fourth and fifth embodiments (variations) is substantially equally applied.

Here, in the electrode assembly 110, the height of the core-side uncoated portion B1 is smaller than the height of the intermediate uncoated portion B2. Additionally, the length H of the innermost uncoated portion in the intermediate uncoated portion B2 is equal to or smaller than the radial length R of the core-side uncoated portion B1.

Accordingly, when the intermediate uncoated portion B2 is bent, the bent part does not block the cavity 112 at the core of the electrode assembly 110. When the cavity 112 is not blocked, there is no difficulty in the electrolyte injection process, and the electrolyte solution injection efficiency improves. Additionally, it may be possible to easily perform the welding process between the current collector plate of the negative electrode and the battery can by inserting the welding jig through the cavity 112.

In a variation, the structure in which the height of the intermediate uncoated portion B2 increases gradually or stepwise from the core toward the outer circumference may be extended to the outer circumference-side uncoated portion B3. In this case, the height of the uncoated portion 43a may increase gradually or stepwise from the boundary between the core-side uncoated portion B1 and the intermediate uncoated portion B2 to the outermost surface of the electrode assembly 110.

Here, the lower uncoated portion 43b has the same structure as the upper uncoated portion 43a. In a variation, the lower uncoated portion 43b may have the conventional electrode plate structure or the electrode plate structure of other embodiments (variations).

The end portion 111 of the upper uncoated portion 43a and the lower uncoated portion 43b may be bent from the outer circumference of the electrode assembly 110 toward the core. In this instance, the core-side uncoated portion B1 is substantially unbent.

When the intermediate uncoated portion B2 and the outer circumference-side uncoated portion B3 include the plurality of segments, it may be possible to mitigate bending stress, thereby preventing tearing or abnormal deformation in the uncoated portion 43a, 43b near the notching valley. Additionally, when the width and/or height and/or pitch of the segments is adjusted according to the numerical range of the above-described embodiment, the segments overlap in multilayers enough to ensure the weld strength when the segments are bent toward the core and an empty hole (a gap) is not formed on the bent surface (surface viewed from the Y axis).

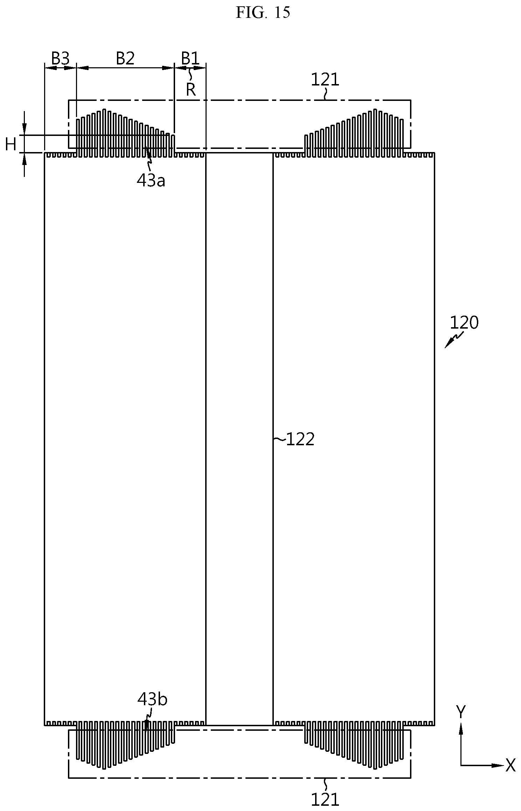

FIG. 15 is a cross-sectional view of the electrode assembly 120 according to another embodiment of the present disclosure, taken along the Y axis direction (the winding axis direction).

Referring to FIG. 15, the electrode assembly 120 has substantially the same configuration as the electrode assembly 100 of FIG. 13, only different in the pattern of the height of the intermediate uncoated portion B2 that increases gradually or stepwise and then decreases.

The height change of the intermediate uncoated portion B2 may be made by adjusting the step pattern (see FIG. 6) included in the intermediate uncoated portion B2 or the height of the segments (see FIG. 7a or 7b).

In the electrode assembly 120, the height of the core-side uncoated portion B1 is smaller than the height of the intermediate uncoated portion B2. Additionally, the height H of the innermost uncoated portion in the intermediate uncoated portion B2 is equal to or smaller than the radial length R of the core-side uncoated portion B1.

Accordingly, when the intermediate uncoated portion B2 is bent toward the core, the bent part does not block the cavity 122 at the core of the electrode assembly 120. When the cavity 122 is not blocked, there is no difficulty in the electrolyte injection process, and the electrolyte solution injection efficiency improves. Additionally, it may be possible to easily perform the welding process between the current collector plate of the negative electrode and the battery can by inserting the welding jig through the cavity 122.

Additionally, the height of the outer circumference-side uncoated portion B3 is smaller than the height of the intermediate uncoated portion B2. Accordingly, it may be possible to prevent internal circuit shorts that occur when the outer circumference-side uncoated portion B3 is pressed against the beading portion of the battery can. In a variation, the height of the outer circumference-side uncoated portion B3 may decrease gradually or stepwise toward the outer circumference.

Here, the lower uncoated portion 43b has the same structure as the upper uncoated portion 43a. In a variation, the lower uncoated portion 43b may have the conventional electrode plate structure or the electrode plate structure of other embodiments (variations).

Here, the end portion 121 of the upper uncoated portion 43a and the lower uncoated portion 43b may be bent from the outer circumference of the electrode assembly 120 toward the core. In this instance, the core-side uncoated portion B1 and the outer circumference-side uncoated portion B3 are substantially unbent.

Here, when the intermediate uncoated portion B2 includes the plurality of segments, it may be possible to mitigate bending stress, thereby preventing tearing or abnormal deformation of the uncoated portion 43a, 43b. Additionally, when the width and/or height and/or pitch of the segments is adjusted according to the numerical range of the above-described embodiment, the segments overlap in multilayers enough to ensure the weld strength when the segments are bent toward the core and an empty hole (a gap) is not formed on the bent surface (surface viewed from the Y axis).

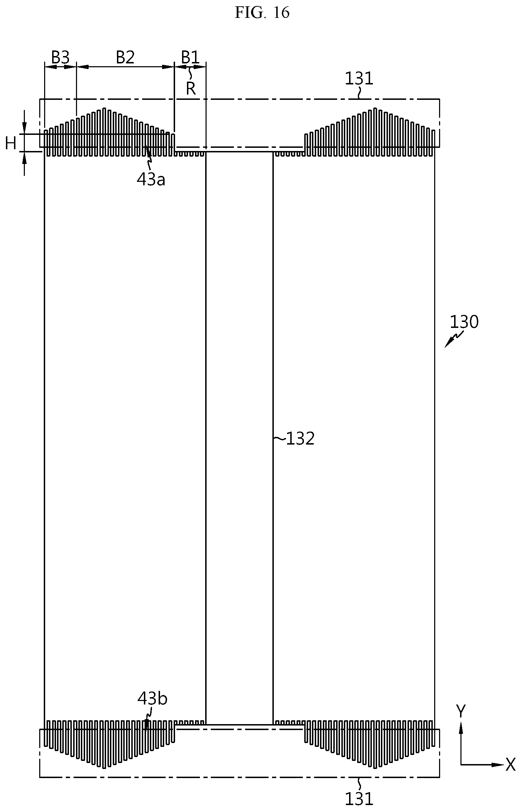

FIG. 16 is a cross-sectional view of the electrode assembly 130 according to another embodiment of the present disclosure, taken along the Y axis direction (the winding axis direction).

Referring to FIG. 16, the electrode assembly 130 has substantially the same configuration as the electrode assembly 120 of FIG. 15, only different in the gradually or stepwise decreasing pattern of the height of the outer circumference-side uncoated portion B3 from the boundary between the outer circumference-side uncoated portion B3 and the intermediate uncoated portion B2 toward the outermost surface of the electrode assembly 130.

The height change of the outer circumference-side uncoated portion B3 may be made by extending the step pattern (see FIG. 6) included in the intermediate uncoated portion B2 to the outer circumference-side uncoated portion B3 and reducing the height of the pattern gradually or stepwise toward the outer circumference. Additionally, in another variation, the height change of the outer circumference-side uncoated portion B3 may be made by extending the segment structure of the intermediate uncoated portion B2 to the outer circumference-side uncoated portion B3 and reducing the height of the segments gradually or stepwise toward the outer circumference.

In the electrode assembly 130, the height of the core-side uncoated portion B1 is smaller than the height of the intermediate uncoated portion B2. Additionally, the height H of the innermost uncoated portion in the intermediate uncoated portion B2 is equal to or smaller than the radial length R of the core-side uncoated portion B1.

Accordingly, when the intermediate uncoated portion B2 is bent toward the core, the bent part does not block the cavity 132 at the core of the electrode assembly 120. When the cavity is not blocked, there is no difficulty in the electrolyte injection process, and the electrolyte solution injection efficiency improves. Additionally, it may be possible to easily perform the welding process between the current collector plate of the negative electrode and the battery can by inserting the welding jig through the cavity 132.

Here, the lower uncoated portion 43b has the same structure as the upper uncoated portion 43a. In a variation, the lower uncoated portion 43b may have the conventional electrode plate structure or the electrode plate structure of other embodiments (variations).

Here, the end portion 131 of the upper uncoated portion 43a and the lower uncoated portion 43b may be bent from the outer circumference of the electrode assembly 130 toward the core. In this instance, the core-side uncoated portion B1 is substantially unbent.

When the intermediate uncoated portion B2 and the outer circumference-side uncoated portion B3 include the plurality of segments, it may be possible to mitigate bending stress, thereby preventing tearing or abnormal deformation of the notching valley part of the uncoated portions 43a, 43b. Additionally, when the width and/or height and/or pitch of the segments is adjusted according to the numerical range of the above-described embodiment, the segments overlap in multilayers enough to ensure the weld strength when the segments are bent toward the core and an empty hole (a gap) is not formed on the bent surface (surface viewed from the Y axis).

The various electrode assembly structures according to the embodiments of the present disclosure may be applied to jellyroll-type cylindrical battery cells.

Preferably, the cylindrical battery cell may be, for example, a cylindrical battery cell 10 having a ratio of form factor (defined as a value obtained by dividing the diameter of the cylindrical battery cell by its height, i.e., a ratio of diameter Φ to height H) large than approximately 0.4.

Here, the form factor refers to a value indicating the diameter and height of the cylindrical battery cell. The cylindrical battery cell according to an embodiment of the present disclosure may be, for example, 46110 cell, 48750 cell, 48110 cell, 48800 cell, 46800 cell. **In** the numbers indicating the form factor, the former two numbers indicate the diameter of the cell, the next two numbers indicate the height of the cell, and the last number 0 indicates that the cross section of the cell is circular.

When the electrode assembly having tab-less structure is applied to the cylindrical battery cell having the ratio of form factor of more than 0.4, the uncoated portion is easily torn due to high stress applied in the radial direction when bending the uncoated portion. Additionally, it is necessary to increase the number of overlapping layers of the uncoated portion enough to ensure sufficient weld strength when welding the current collector plate to the bent surface of the uncoated portion and reduce the resistance. These requirements may be met by the electrode plate and the electrode assembly according to the embodiments (variations) of the present disclosure.

The battery cell according to an embodiment of the present disclosure may be a cylindrical battery cell having an approximately cylindrical shape with the diameter of approximately 46 mm, the height of approximately **110** mm, and the ratio of form factor of 0.418.

The battery cell according to another embodiment may be a cylindrical battery cell having an approximately cylindrical shape with the diameter of approximately 48 mm, the height of approximately 75 mm, and the ratio of form factor of 0.640.

The battery cell according to another embodiment may be a cylindrical battery cell having an approximately cylindrical shape with the diameter of approximately 48 mm, the height of approximately 110 mm, and the ratio of form factor of 0.418.

The battery cell according to another embodiment may be a cylindrical battery cell having an approximately cylindrical shape with the diameter of approximately 48 mm, the height of approximately 80 mm, and the ratio of form factor of 0.600.

The battery cell according to another embodiment may be a cylindrical battery cell having an approximately cylindrical shape with the diameter of approximately 46 mm, the height of approximately 80 mm, and the ratio of form factor of 0.575.

Conventionally, battery cells having the ratio of form factor of approximately 0.4 or less have been used. That is, for example, 18650 cell, 21700 cell have been used. The 18650 cell has the diameter of approximately 18 mm, the height of approximately 65 mm, and the ratio of form factor of 0.277. The 21700 cell has the diameter of approximately 21 mm, the height of approximately 70 mm, and the ratio of form factor of 0.300.

Hereinafter, the cylindrical battery cell according to an embodiment of the present disclosure will be described in detail.

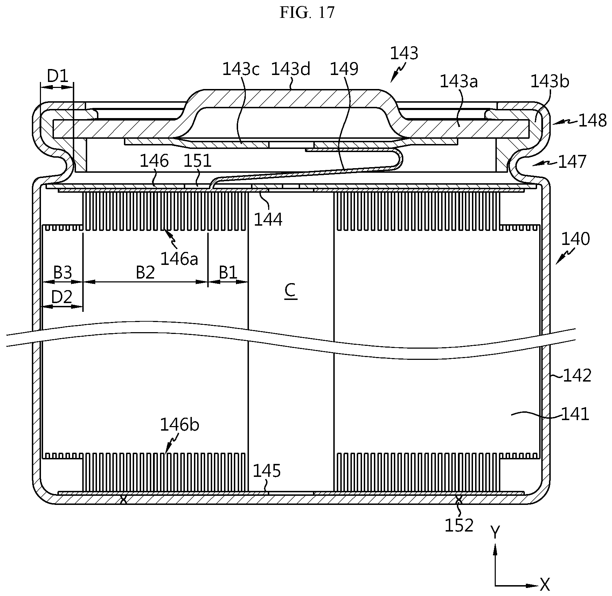

FIG. 17 is a cross-sectional view of the cylindrical battery cell 140 according to an embodiment of the present disclosure, taken along the Y axis direction.

Referring to FIG. 17, the cylindrical battery cell 140 according to an embodiment of the present disclosure includes an electrode assembly 141 including a first electrode plate, a separator and a second electrode plate, a battery can 142 accommodating the electrode assembly 141 and a sealing body 143 that seals an open end portion of the battery can 142.

The battery can 142 is a cylindrical container having an open portion on top. The battery can 142 is made of metal having conductive properties such as aluminum or steel. The battery can 142 accommodates the electrode assembly 141 together with an electrolyte in the internal space through the top open portion.

The electrolyte may be a salt having a structure such as A⁺B⁻. Here, A⁺ includes an alkali metal cation such as Li⁺, Na⁺, K⁺ or a combination thereof, and B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be dissolved in an organic solvent. The organic solvent is not limited to a particular type and may include solvents for electrolyte solutions of electrochemical devices. For example, the organic solvent may include carbonate-based solvents including propylene carbonate (PC), ethylene carbonate (EC), diethyl carbonate (DEC), dimethyl carbonate (DMC) and dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone or a mixture thereof.

The electrode assembly 141 may have a jellyroll shape. As shown in FIG. 2, the electrode assembly 141 may be manufactured by stacking a lower separator, a first electrode plate, an upper separator and a second electrode plate in a sequential order at least once to form a stack and winding the stack around the winding center C.

The first electrode plate and the second electrode plate have different polarity. That is, one is positive polarity and the other is negative polarity. At least one of the first electrode plate or the second electrode plate may have the electrode plate structure according to the above-described embodiments (variations). Additionally, the other one of the first electrode plate and the second electrode plate may have the conventional electrode plate structure or the electrode plate structure according to the embodiments (variations).

The uncoated portion 146a of the first electrode plate and the uncoated portion 146b of the second electrode plate protrude at the upper part and the lower part of the electrode assembly 141, respectively. The first electrode plate has the electrode plate structure of the first embodiment (variation). Accordingly, the uncoated portion 146a of the first electrode plate has a smaller height of the outer circumference-side uncoated portion B3 than the height of the other uncoated portion. The outer circumference-side uncoated portion B3 is spaced a predetermined distance apart from the inner circumferential surface of the battery can 142, in particular, the beading portion 147. Accordingly, it may be possible to avoid the contact between the outer circumference-side uncoated portion B3 of the first electrode plate and the battery can 142 electrically connected to the second electrode plate, thereby preventing internal short circuits of the cylindrical battery cell 140.

The uncoated portion 146b of the second electrode plate has the equal height. **In a** variation, the uncoated portion 146b of the second electrode plate may have the same structure as the uncoated portion 146a of the first electrode plate. **In** another variation, the uncoated portion 146b of the second electrode plate may selectively have the uncoated portion structure of the electrode plate according to the embodiments (variations).

The sealing body 143 may include a cap plate 143a, a first gasket 143b that provides sealability between the top plate 143a and the battery can 142 and has insulating properties, and a connection plate 143c electrically and mechanically coupled to the top plate 143a.

The cap plate 143a is the component made of metal having conductive properties and covers the top open portion of the battery can 142. The cap plate 143a is electrically connected to the uncoated portion 146a of the first electrode plate and electrically isolated from the battery can 142 through the first gasket 143b. Accordingly, the cap plate 143a may act as a first electrode terminal of the cylindrical battery cell 140.

The cap plate 143a is mounted on the beading portion 147 of the battery can 142, and fixed by the crimping portion 148. The first gasket 143b may be disposed between the cap plate 143a and the crimping portion 148 to ensure sealability of the battery can 142 and electrical insulation between the battery can 142 and the cap plate 143a. The cap plate 143a may have a protruding portion 143d that protrudes upward from the central part.

The battery can 142 is electrically connected to the uncoated portion 146b of the second electrode plate. Accordingly, the battery can 142 has the same polarity as the second electrode plate. When the second electrode plate has the negative polarity, the battery can 142 also has the negative polarity.

The battery can 142 has the beading portion 147 and the crimping portion 148 at the upper end. The beading portion 147 is formed by beading around the outer circumferential surface of the battery can 142. The beading portion 147 may prevent the electrode assembly 141 received in the battery can 142 from slipping out through the top open portion of the battery can 142, and may act as a support on which the sealing body 143 is mounted.

The inner circumferential surface of the beading portion 147 is spaced a predetermined distance apart from the outer circumference-side uncoated portion B3 of the first electrode plate. More specifically, the lower end of the inner circumferential surface of the beading portion 147 is spaced the predetermined distance apart from the outer circumference-side uncoated portion B3 of the first electrode plate. Additionally, because the outer circumference-side uncoated portion B3 has a small height, when beading the battery can 12 inward to form the beading portion 147, the outer circumference-side uncoated portion B3 is not substantially affected. Accordingly, the outer circumference-side uncoated portion B3 is not pressed by other component such as the beading portion 147, thereby preventing partial deformation of the electrode assembly 141, and preventing internal short circuits of the cylindrical battery cell 140.

Preferably, when the beading depth of the beading portion 147 is defined as D1 and the radial length from the inner circumferential surface of the battery can 142 to the boundary between the outer circumference-side uncoated portion B3 and the intermediate uncoated portion B2 is defined as D2, the relation equation D1 ≤ D2 may be satisfied. In this case, when beading the battery can 142 to form the beading portion 147, it is, in substance, possible to prevent damage to the outer circumference-side uncoated portion B3.

The crimping portion 148 is formed on the beading portion 147. The crimping portion 148 is extended and bent to cover the outer circumferential surface of the cap plate 143a on the beading portion 147 and a part of the upper surface of the cap plate 143a.

The cylindrical battery cell 140 may further include a first current collector plate 144 and/or a second current collector plate 145 and/or an insulator 146.

The first current collector plate 144 is coupled to the upper part of the electrode assembly 141. The first current collector plate 144 is made of metal having conductive properties such as aluminum, copper, nickel and electrically connected to the uncoated portion 146a of the first electrode plate. A lead 149 may be connected to the first current collector plate 144. The lead 149 may be extended upward from the electrode assembly 141 and coupled to the connection plate 143c or directly coupled to the lower surface of the cap plate 143a. The coupling between the lead 149 and other component may be accomplished through welding.

Preferably, the first current collector plate 144 may be integrally formed with the lead 149. In this case, the lead 149 may have a long plate shape extending outward from the center of the first current collector plate 144.

The first current collector plate 144 may have a plurality of unevenness radially formed on the lower surface thereof. When the radial unevenness are present, the unevenness may be imprinted on the uncoated portion 146a of the first electrode plate by pressing the first current collector plate 144.

The first current collector plate 144 is coupled to the end of the uncoated portion 146a of the first electrode plate. The coupling between the uncoated portion 146a and the first current collector plate 144 may be, for example, accomplished by laser welding. The laser welding may be done by melting a part of the current collector plate base material. **In** a variation, the welding between the first current collector plate 144 and the uncoated portion 146a may be done with a solder interposed between them. **In** this case, the solder may have lower melting point than the first current collector plate 144 and the uncoated portion 146a. The laser welding may be replaced by resistance welding, ultrasonic welding, etc.

The second current collector plate 145 may be coupled to the lower surface of the electrode assembly 141. A surface of the second current collector plate 145 may be coupled to the uncoated portion 146b of the second electrode plate by welding, and the opposite surface may be coupled to the inner bottom surface of the battery can 142 by welding. The coupling structure between the second current collector plate 145 and the uncoated portion 146b of the second electrode plate may be substantially the same as the coupling structure between the first current collector plate 144 and the uncoated portion 146a of the first electrode plate.

The uncoated portions 146a, 146b are not limited to the shown structure. Accordingly, the uncoated portions 146a, 146b may selectively have not only the conventional uncoated portion structure but also the uncoated portion structure of the electrode plate according to the embodiments (variations).

The insulator 146 may cover the first current collector plate 144. As the insulator 146 covers the first current collector plate 144 on the upper surface of the first current collector plate 144, it may be possible to prevent the direct contact between the first current collector plate 144 and the inner circumferential surface of the battery can 142.

The insulator 146 has a lead hole 151 through which the lead 149 extending upward from the first current collector plate 144 is drawn outward. The lead 149 is extended upward through the lead hole 151 and coupled to the lower surface of the connection plate 143c or the lower surface of the cap plate 143a.

The edge area of the insulator 146 may be disposed between the first current collector plate 144 and the beading portion 147 to fix a combination of the electrode assembly 141 and the first current collector plate 144. Accordingly, it may be possible to improve the assembly stability of the battery cell 140 by the limited movement of the combination of the electrode assembly 141 and the first current collector plate 144 in the height direction of the battery cell 140.

The insulator 146 may be made of a polymer resin having insulation properties. In an example, the insulator 146 may include polyethylene, polypropylene, polyimide or polybutyleneterephthalate.

The battery can 142 may further include a vent 152 in the lower surface. The vent 152 corresponds to an area having a smaller thickness than the surrounding area on the lower surface of the battery can 142. The vent 152 is structurally vulnerable compared to the surrounding area. Accordingly, when the internal pressure rises above a predetermined level due to a failure or fault in the cylindrical battery cell 140, the vent 152 may rupture to vent gases generated in the battery can 142.

The vent 152 may be continuously or discontinuously formed in a circular pattern on the lower surface of the battery can 142. In a variation, the vent 152 may be formed in a straight line pattern or any other pattern.

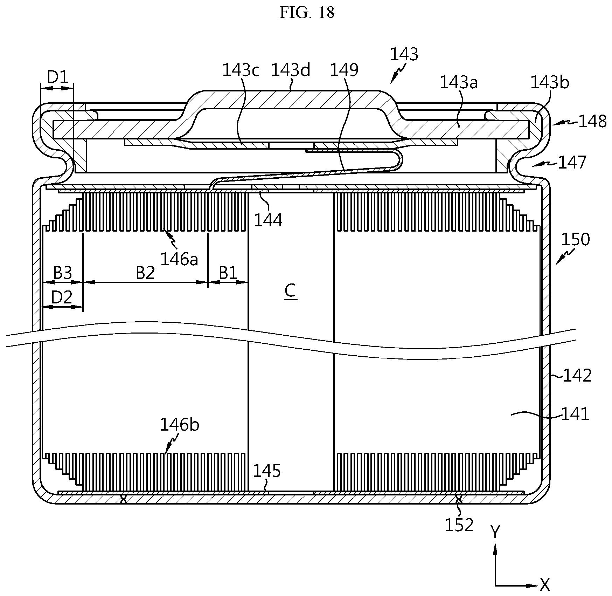

FIG. 18 is a cross-sectional view of the cylindrical battery cell 150 according to another embodiment of the present disclosure, taken along the Y axis direction.

Referring to FIG. 18, the cylindrical battery cell 150 has substantially the same configuration as the cylindrical battery cell 140 of FIG. 17 except that the electrode plate structure of the second embodiment (variation) is used in the uncoated portion 146a of the first electrode plate.

Referring to FIG. 18, the uncoated portion 146a of the first electrode plate may have a gradual or stepwise decrease in the height of the outer circumference-side uncoated portion B3 toward the inner circumferential surface of the battery can 142. Preferably, an imaginary line connecting the uppermost end of the outer circumference-side uncoated portion B3 may have an identical or similar shape to the inner circumferential surface of the beading portion 147.

The outer circumference-side uncoated portion B3 form an inclined surface. Accordingly, it may be possible to prevent damage to the outer circumference-side uncoated portion B3 due to pushing by the beading portion 147 when beading the battery can 142 to form the beading portion 147. Additionally, it may be possible to suppress internal short circuits due to the contact between the outer circumference-side uncoated portion B3 and the battery can 142 having the different polarity.

The remaining configuration of the cylindrical battery cell 150 is substantially the same as the previous description (variation).

The uncoated portions 146a, 146b are not limited to the shown structure. Accordingly, the uncoated portions 146a, 146b may selectively have not only the conventional uncoated portion structure but also the uncoated portion structure of the electrode plate according to the embodiments (variations).

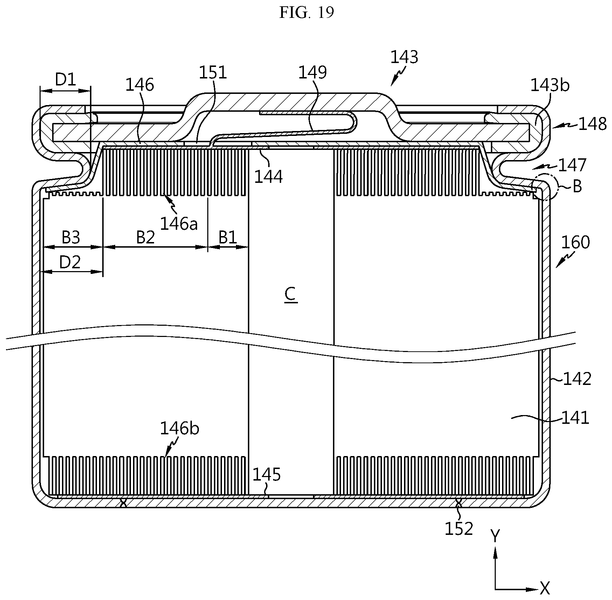

FIG. 19 is a cross-sectional view of the cylindrical battery cell 160 according to another embodiment of the present disclosure, taken along the Y axis direction.

Referring to FIG. 19, when comparing the cylindrical battery cell 160 with the cylindrical battery cells 140, 150 described above, the configuration is substantially the same except a structure in which the lead 149 connected to the first current collector plate 144 is directly connected to the cap plate 143a of the sealing body 143 through the lead hole 151 of the insulator 146 and the insulator 146 and the first current collector plate 144 are in close contact with the lower surface of the cap plate 143a.

In the cylindrical battery cell 160, the diameter of the first current collector plate 144 and the outermost diameter of the intermediate uncoated portion B2 are smaller than the minimum inner diameter of the battery can 142. Additionally, the diameter of the first current collector plate 144 may be equal to or larger than the outermost diameter of the intermediate uncoated portion B2.

Specifically, the minimum inner diameter of the battery can 142 may correspond to the inner diameter of the battery can 142 at the location at which the beading portion 147 is formed. In this instance, the outermost diameter of the first current collector plate 144 and the intermediate uncoated portion B2 is smaller than the inner diameter of the battery can 142 at the location at which the beading portion 147 is formed. Additionally, the diameter of the first current collector plate 144 may be equal to or larger than the outermost diameter of the intermediate uncoated portion B2. The edge area of the insulator 146 may be bent downward and disposed between the outer circumference-side uncoated portion B3 and the beading portion 147 to fix the combination of the electrode assembly 141 and the first current collector plate 144.

Preferably, the insulator 146 may include a part that covers the outer circumference-side uncoated portion B3 and a part that covers the first current collector plate 144, and a part connecting the two parts may have a curved shape to conform to the curved shape of the beading portion 147. The insulator 146 may insulate the outer circumference-side uncoated portion B3 from the inner circumferential surface of the beading portion 147 and also insulate the first current collector plate 144 from the inner circumferential surface of the beading portion 147.

The first current collector plate 144 may be located at the higher position than the lower end of the beading portion 147, and be coupled to the core-side uncoated portion B1 and the intermediate uncoated portion B2. In this instance, the beading depth D1 of the beading portion 147 is equal to or smaller than the distance D2 from the inner circumferential surface of the battery can 142 to the boundary between the outer circumference-side uncoated portion B3 and the intermediate uncoated portion B2. Accordingly, the core-side uncoated portion B1 and the intermediate uncoated portion B2 and the first current collector plate 144 coupled thereto may be located at the higher position than the lower end of the beading portion 147. The lower end of the beading portion 147 refers to the notching valley part between the part of the battery can 142 in which the electrode assembly 141 is received and the beading portion 147.

Because the core-side uncoated portion B1 and the intermediate uncoated portion B2 occupy the internal space of the beading portion 147 in the radial direction, an empty space between the electrode assembly 141 and the cap plate 143a may be minimized. Additionally, the connection plate 143c located in the empty space between the electrode assembly 141 and the cap plate 143a is omitted. Accordingly, the lead 149 of the first electrode plate 144 may be directly coupled to the lower surface of the cap plate 143a. By the above-described structure, the empty space inside the battery cell may reduce, and the energy density may be maximized as much as the reduced empty space.

In the cylindrical battery cell 160, the first current collector plate 144 and the second current collector plate 145 may be welded to the end portions of the uncoated portions 146a, 146b, respectively, in the same way as the above-described embodiment.

The uncoated portions 146a, 146b are not limited to the shown structure. Accordingly, the uncoated portions 146a, 146b may selectively have not only the conventional uncoated portion structure but also the uncoated portion structure of the electrode plate according to the embodiments (variations).

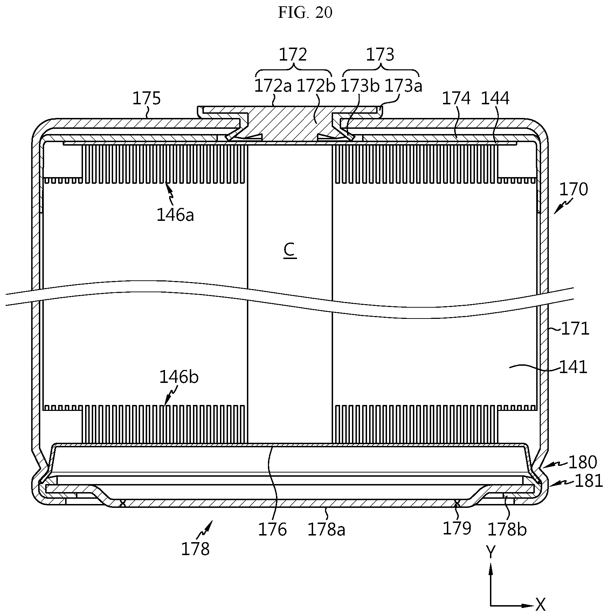

FIG. 20 is a cross-sectional view of the cylindrical battery cell 170 according to another embodiment of the present disclosure, taken along the Y axis.

Referring to FIG. 20, when comparing the cylindrical battery cell 170 with the cylindrical battery cell 140 shown in FIG. 17, the structure of the electrode assembly is substantially the same, and they are different in that the remaining structure except the electrode assembly is changed.

Specifically, the cylindrical battery cell 170 includes a battery can 171 having a rivet terminal 172 installed therethrough. The rivet terminal 172 is installed on a closed surface (the upper surface in the drawing) of the battery can 171. The rivet terminal 172 is riveted into a through-hole of the battery can 171 with a second gasket 173 having insulation properties interposed between them. The rivet terminal 172 is exposed to the outside in the opposite direction to the gravitational direction.

The rivet terminal 172 includes a terminal exposure portion 172a and a terminal insertion portion 172b. The terminal exposure portion 172a is exposed to the outside of the closed surface of the battery can 171. The terminal exposure portion 172a may be located at approximately the central part of the closed surface of the battery can 171. The maximum diameter of the terminal exposure portion 172a may be larger than the maximum diameter of the through-hole of the battery can 171. The terminal insertion portion 172b may go through approximately the central part of the closed surface of the battery can 171 and electrically connect to the uncoated portion 146a of the first electrode plate. The terminal insertion portion 172b may be rivet-coupled to the inner surface of the battery can 171. That is, the end portion of the terminal insertion portion 172b may have a bent shape toward the inner surface of the battery can 171. The maximum diameter of the end portion of the terminal insertion portion 172b may be larger than the maximum diameter of the through-hole of the battery can 171.

The bottom surface of the terminal insertion portion 172b may be welded to the first current collector plate 144 connected to the uncoated portion 146a of the first electrode plate. An insulation cap 174 made of an insulation material may be disposed between the first current collector plate 144 and the inner surface of the battery can 171. The insulation cap 174 covers the top of the first current collector plate 144 and the upper edge of the electrode assembly 141. Accordingly, it may be possible to prevent short circuits due to the contact between the outer circumference-side uncoated portion B3 of the electrode assembly 141 and the inner surface of the battery can 171 having different polarity. The terminal insertion portion 172b of the rivet terminal 172 may be welded to the first current collector plate 144 through the insulation cap 174.

The second gasket 173 is disposed between the battery can 171 and the rivet terminal 172 to prevent the electrical contact between the battery can 171 and the rivet terminal 172 having the opposite polarity. Accordingly, the upper surface of the battery can 171 having approximately flat shape may act as a second electrode terminal of the cylindrical battery cell 170.

The second gasket 173 includes a gasket exposure portion 173a and a gasket insertion portion 173b. The gasket exposure portion 173a is disposed between the terminal exposure portion 172a of the rivet terminal 172 and the battery can 171. The gasket insertion portion 173b is disposed between the terminal insertion portion 172b of the rivet terminal 172 and the battery can 171. When riveting the terminal insertion portion 172b, the gasket insertion portion 173b may deform together and come into close contact with the inner surface of the battery can 171. The second gasket 173 may include, for example, a polymer resin having insulation properties.

The gasket exposure portion 173a of the second gasket 173 may be extended to cover the outer circumferential surface of the terminal exposure portion 172a of the rivet terminal 172. When the second gasket 173 covers the outer circumferential surface of the rivet terminal 172, it may be possible to prevent short circuits in the process of coupling an electrical connection component such as a busbar to the upper surface of the battery can 171 and/or the rivet terminal 172. The gasket exposure portion 173a may be extended to cover the outer circumferential surface of the terminal exposure portion 172a together with a part of the upper surface.

When the second gasket 173 includes a polymer resin, the second gasket 173 may be coupled to the battery can 171 and the rivet terminal 172 by heat fusion. **In** this case, sealability at the coupling interface between the second gasket 173 and the rivet terminal 172 and the coupling interface between the second gasket 173 and the battery can 171 may be enhanced. Meanwhile, when the gasket exposure portion 173a of the second gasket 173 is extended to the upper surface of the terminal exposure portion 172a, the rivet terminal 172 and the second gasket 173 may be coupled into one by insert molding.

The remaining area 175 except that the area occupied by the rivet terminal 172 and the second gasket 173 on the upper surface of the battery can 171 corresponds to the second electrode terminal having the opposite polarity to the rivet terminal 172.

The second current collector plate 176 is coupled to the lower part of the electrode assembly 141. The second current collector plate 176 is made of metal having conductive properties such as aluminum, steel, copper, nickel and electrically connected to the uncoated portion 146b of the second electrode plate.

Preferably, the second current collector plate 176 is electrically connected to the battery can 171. To this end, at least part of the edge area of the second current collector plate 176 may be fixed between the inner surface of the battery can 171 and the first gasket 178b. In an example, at least part of the edge area of the second current collector plate 176 may be fixed to the beading portion 182 by welding while being supported on the bottom surface of the beading portion 182 at the lower end of the battery can 171. **In** a variation, at least part of the edge area of the second current collector plate 176 may be directly welded to the inner wall surface of the battery can 171.

The second current collector plate 176 may have a plurality of unevenness radially formed on a surface opposite the uncoated portion 146b. When the unevenness is formed, the unevenness may be imprinted on the uncoated portion 146b by pressing the second current collector plate 176.

Preferably, the second current collector plate 176 and the end portion of the uncoated portion 146b may be coupled by welding, for example, laser welding.

The sealing body 178 that seals the bottom open end of the battery can 171 includes a cap plate 178a and a first gasket 178b. The first gasket 178b electrically separates the cap plate 178a from the battery can 171. A crimping portion 181 fixes the edge of the cap plate 178a and the first gasket 178b together. The cap plate 178a has a vent 179. The configuration of the vent 179 is substantially the same as the above-described embodiment (variation).

Preferably, the cap plate 178a is made of metal having conductive properties. However, because the first gasket 178b is disposed between the cap plate 178a and the battery can 171, the cap plate 178a is not electrically polar. The sealing body 178 seals the open end on the bottom of the battery can 171 and performs the gas venting function when the internal pressure of the battery cell 170 rises above the threshold.

Preferably, the rivet terminal 172 electrically connected to the uncoated portion 146a of the first electrode plate is used as the first electrode terminal. Additionally, in the battery can 171 electrically connected to the uncoated portion 146b of the second electrode plate through the second current collector plate 176, the part 175 of the upper surface of the battery can 171 excluding the rivet terminal 172 is used as the second electrode terminal having different polarity from the first electrode terminal. When the two electrode terminals are located at the upper part of the cylindrical battery cell 170, the electrical connection component such as the busbar may be placed on only one side of the cylindrical battery cell 170. This may bring simplification to battery pack structure and energy density improvement. Additionally, because the part 175 used as the second electrode terminal is approximately flat in shape, it may be possible to ensure a sufficient weld area in the welding of the electrical connection component such as the busbar. Accordingly, the cylindrical battery cell 170 may reduce the resistance at the welded part of the electrical connection component to a desired level.

Meanwhile, the structure of the electrode assembly 141 and the uncoated portion structure are not limited to the shown structure, and may be replaced by the structure of the above-described embodiments (variations).

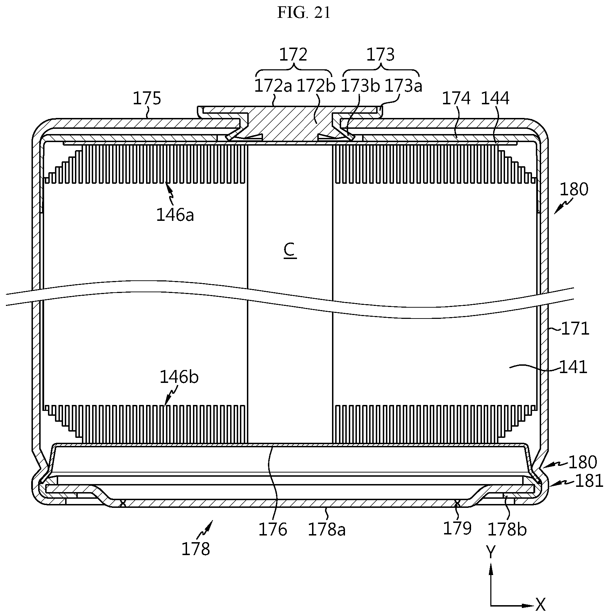

FIG. 21 is a cross-sectional view of the cylindrical battery cell 180 according to another embodiment of the present disclosure, taken along the Y axis.

Referring to FIG. 21, the cylindrical battery cell 180 is substantially the same as the cylindrical battery cell 150 shown in FIG. 18 in the structure of the electrode assembly 141, and the remaining configuration except the electrode assembly 141 is substantially the same as the cylindrical battery cell 170 shown in FIG. 20.

Accordingly, the exemplary configuration (variation) of the cylindrical battery cells 150, 170 may be equally applied to the cylindrical battery cell 180.

Additionally, the structure of the electrode assembly 141 and the uncoated portion structure are not limited to the shown structure, and may be replaced by the structure of the above-described embodiments (variations).

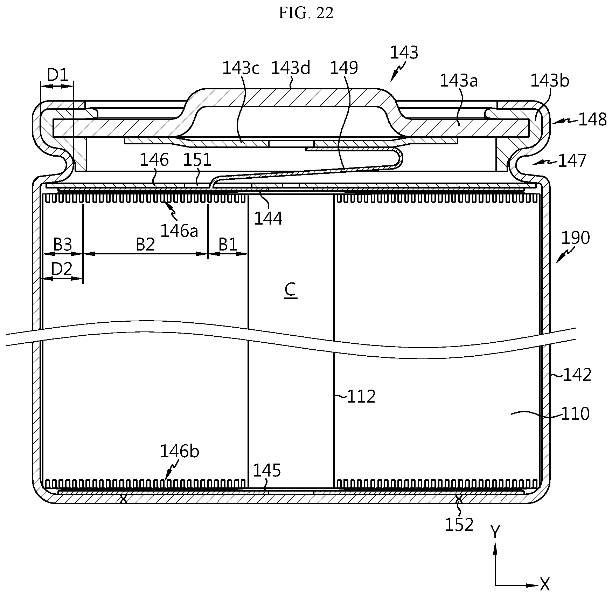

FIG. 22 is a cross-sectional view of the cylindrical battery cell 190 according to another embodiment of the present disclosure, taken along the Y axis.

Referring to FIG. 22, the cylindrical battery cell 190 includes the electrode assembly 110 shown in FIG. 14, and the remaining configuration except the electrode assembly 110 is substantially the same as the cylindrical battery cell 140 shown in FIG. 17.

Referring to FIG. 22, the uncoated portions 146a, 146b of the electrode assembly 110 are bent from the outer circumference toward the core. In this instance, because the height of the core-side uncoated portion B1 is lower than other area, the core-side uncoated portion B1 is substantially unbent. The first current collector plate 144 may be welded to the bent surface of the uncoated portion 146a, and the second current collector plate 145 may be welded to the bent surface of the uncoated portion 146b. The bent surface may be formed on top and bottom of the electrode assembly 110 by multilayer overlapping when bending the uncoated portions 146a, 146b.

The electrode assembly 110 has a smaller height of the core-side uncoated portion B1 than the other area. Additionally, as shown in FIG. 14, the height H of the innermost uncoated portion in the intermediate uncoated portion B2 is equal to or smaller than the radial length R of the core-side uncoated portion B1. Accordingly, when the uncoated portion 46a is bent toward the core, the cavity 112 at the core of the electrode assembly 110 may be open upward, not blocked (see the dashed circle).

When the cavity 112 is not blocked, there is no difficulty in the electrolyte injection process, and the electrolyte solution injection efficiency improves. Additionally, it may be possible to easily perform the welding process between the second current collector plate 145 and the battery can 142 by inserting the welding jig through the cavity 112.

In case the uncoated portions 146a, 146b have the segment structure, when the width and/or height and/or pitch of the segments is adjusted to satisfy the numerical range of the above-described embodiment, the segments overlap in multilayers enough to ensure the weld strength when the segments are bent and an empty space (a gap) is not formed on the bent surface.

The structure of the uncoated portions 146a, 146b may be changed to the structure according to the above-described embodiments (variations) as opposed to the shown structure. Additionally, the present disclosure does not preclude applying the conventional uncoated portion structure to any one of the uncoated portions 146a, 146b.

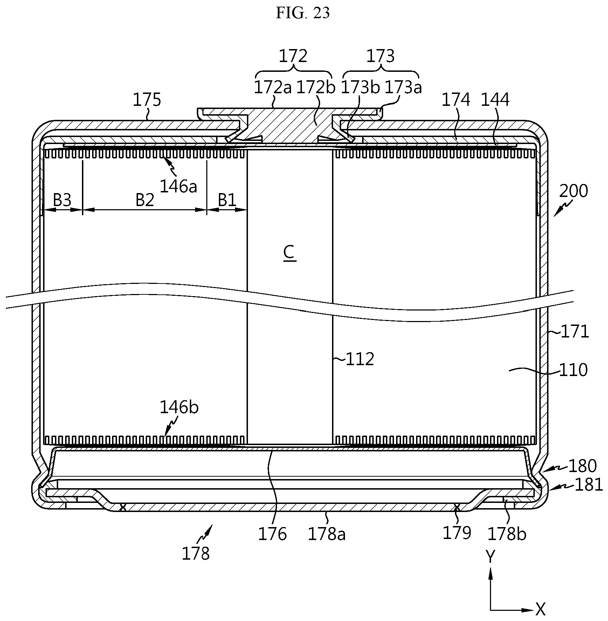

FIG. 23 is a cross-sectional view of the cylindrical battery cell 200 according to another embodiment of the present disclosure, taken along the Y axis.

Referring to FIG. 23, the cylindrical battery cell 200 includes the electrode assembly 110 shown in FIG. 14, and the remaining configuration except the electrode assembly 110 is substantially the same as the cylindrical battery cell 180 shown in FIG. 21.

Referring to FIG. 23, the uncoated portions 146a, 146b of the electrode assembly 110 are bent from the outer circumference toward the core. In this instance, because the height of the core-side uncoated portion B1 is lower than the other area, the core-side uncoated portion B1 is substantially unbent. The first current collector plate 144 is welded to the bent surface of the uncoated portion 146a, and the second current collector plate 176 may be welded to the bent surface of the uncoated portion 146b.

The electrode assembly 110 has a smaller height of the core-side uncoated portion B1 than the other area. Additionally, as shown in FIG. 14, the height H of the innermost uncoated portion in the intermediate uncoated portion B2 is equal to or smaller than the radial length R of the core-side uncoated portion B1. Accordingly, when the uncoated portions 146a, 146b are bent toward the core, the cavity 112 at the core of the electrode assembly 110 may be open upward, not blocked (see the dashed circle).

When the cavity 112 is not blocked, there is no difficulty in the electrolyte injection process, and the electrolyte solution injection efficiency improves. Additionally, it may be possible to easily perform the welding process between the second current collector plate 176 and the battery can 171 by inserting the welding jig through the cavity 112.

In case the uncoated portions 146a, 146b have the segment structure, the width and/or height and/or pitch of the segments is adjusted to satisfy the numerical range of the above-described embodiment, the segments overlap in multilayers enough to ensure the weld strength when the segments are bent and an empty hole (a gap) is not formed on the bent surface.

The structure of the uncoated portions 146a, 146b may be changed to the structure according to the above-described embodiments (variations) as opposed to the shown structure. Additionally, the present disclosure does not preclude applying the conventional uncoated portion structure to any one of the uncoated portions 146a, 146b.

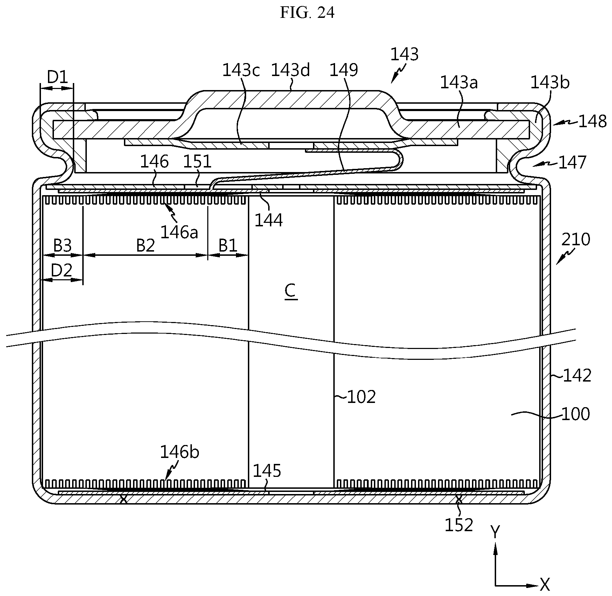

FIG. 24 is a cross-sectional view of the cylindrical battery cell 210 according to another embodiment of the present disclosure, taken along the Y axis.

Referring to FIG. 24, the cylindrical battery cell 210 includes the electrode assembly 100 shown in FIG. 13, and the remaining configuration except the electrode assembly 100 is substantially the same as the cylindrical battery cell 140 shown in FIG. 17.

Preferably, the uncoated portions 146a, 146b of the electrode assembly 100 are bent from the outer circumference toward the core. In this instance, because the height of the core-side uncoated portion B1 and the outer circumference-side uncoated portion B3 of the uncoated portion 146a is lower than the other area, the core-side uncoated portion B1 and the outer circumference-side uncoated portion B3 are substantially unbent. The same is the case with the uncoated portion 146b. The first current collector plate 144 may be welded to the bent surface of the uncoated portion 146a, and the second current collector plate 145 may be welded to the bent surface of the uncoated portion 146b.

The height of the core-side uncoated portion B1 is lower than the intermediate uncoated portion B2. Additionally, as shown in FIG. 14, the height H of the innermost uncoated portion in the intermediate uncoated portion B2 is equal to or smaller than the radial length R of the core-side uncoated portion B1.

Accordingly, when the uncoated portions 146a, 146b are bent toward the core, the cavity 102 at the core of the electrode assembly 100 may be open upward, not blocked (see the dashed circle).

When the cavity 102 is not blocked, there is no difficulty in the electrolyte injection process, and the electrolyte solution injection efficiency improves. Additionally, it may be possible to easily perform the welding process between the second current collector plate 145 and the battery can 142 by inserting the welding jig through the cavity.

Additionally, the height of the outer circumference-side uncoated portion B3 is lower than the intermediate uncoated portion B2. Accordingly, when the uncoated portion 146a is bent, the outer circumference-side uncoated portion B3 is substantially unbent. Additionally, because the outer circumference-side uncoated portion B3 is adequately spaced apart from the beading portion 147, it may be possible to prevent damage to the outer circumference-side uncoated portion B3 in the beading process of forming the beading portion 147.

In case the uncoated portions 146a, 146b have the segment structure, when the width and/or height and/or pitch of the segments is adjusted to satisfy the numerical range of the above-described embodiment, the segments overlap in multilayers enough to ensure the weld strength when the segments are bent and an empty hole (a gap) is not formed on the bent surface.

The structure of the uncoated portions 146a, 146b may be changed to the structure according to the above-described embodiments (variations) as opposed to the shown structure. Additionally, the present disclosure does not preclude applying the conventional uncoated portion structure to any one of the uncoated portions 146a, 146b.

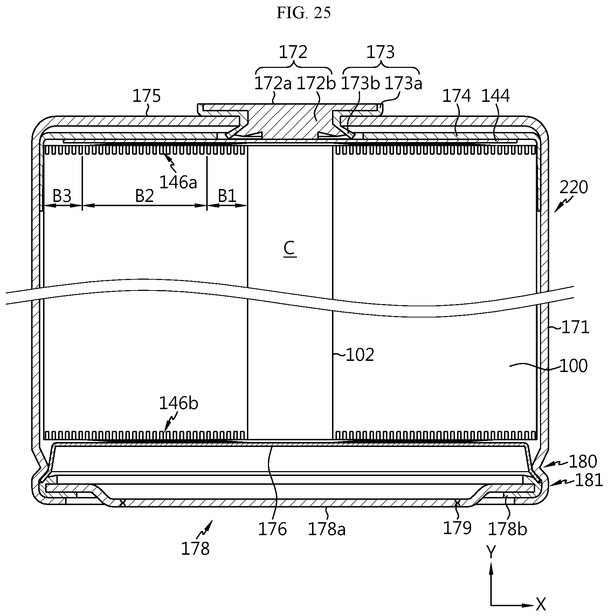

FIG. 25 is a cross-sectional view of the cylindrical battery cell 220 according to another embodiment of the present disclosure, taken along the Y axis.

Referring to FIG. 25, the cylindrical battery cell 220 includes the electrode assembly 100 shown in FIG. 13, and the remaining configuration except the electrode assembly 100 is substantially the same as the cylindrical battery cell 180 shown in FIG. 12.

Preferably, the uncoated portions 146a, 146b of the electrode assembly 100 are bent from the outer circumference toward the core. In this instance, because the height of the core-side uncoated portion B1 of the uncoated portion 146a is lower than the other area, the core-side uncoated portion B1 is substantially unbent. The same is the case with the uncoated portion 146b. The first current collector plate 144 may be welded to the bent surface of the uncoated portion 146a, and the second current collector plate 176 may be welded to the bent surface of the uncoated portion 146b.

The electrode assembly 100 has a smaller height of the core-side uncoated portion B1 than the intermediate uncoated portion B2. Additionally, as shown in FIG. 14, the height H of the innermost uncoated portion in the intermediate uncoated portion B2 is equal to or smaller than the radial length R of the core-side uncoated portion B 1. Accordingly, when the uncoated portion 146a is bent toward the core, the cavity 102 at the core of the electrode assembly 100 may be open upward, not blocked (see the dashed circle).

When the cavity 102 is not blocked, there is no difficulty in the electrolyte injection process, and the electrolyte solution injection efficiency improves. Additionally, it may be possible to easily perform the welding process between the second current collector plate 176 and the battery can 171 by inserting the welding jig through the cavity 102.

Additionally, the height of the outer circumference-side uncoated portion B3 of the uncoated portion 146a is smaller than the intermediate uncoated portion B2. Accordingly, when the uncoated portion 146a is bent, the outer circumference-side uncoated portion B3 is substantially unbent. The same is the case with the uncoated portion 146b.

In case the uncoated portions 146a, 146b have the segment structure, when the width and/or height and/or pitch of the segments is adjusted to satisfy the numerical range of the above-described embodiment, the segments overlap in multilayers enough to ensure the weld strength when the segments are bent and an empty hole (a gap) is not formed on the bent surface.

The structure of the uncoated portions 146a, 146b may be changed to the structure according to the above-described embodiments (variations) as opposed to the shown structure. Additionally, the present disclosure does not preclude applying the conventional uncoated portion structure to any one of the uncoated portions 146a, 146b.

The cylindrical battery cell according to the above-described embodiments (variations) may be used to manufacture a battery pack.

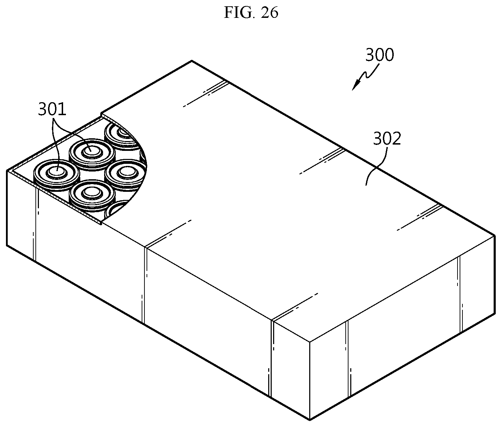

FIG. 26 is a diagram schematically showing the configuration of the battery pack according to an embodiment of the present disclosure.

Referring to FIG. 26, the battery pack 300 according to an embodiment of the present disclosure includes a set of cylindrical battery cells 301 electrically connected to each other and a pack housing 302 accommodating the set of cylindrical battery cells 301. The cylindrical battery cell 301 is any one of the battery cells according to the above-described embodiments (variations). **In** the drawings, for convenience of illustration, the illustration of components such as a busbar for electrical connection of the cylindrical battery cells 301, a cooling unit and an external terminal is omitted.

The battery pack 300 may be mounted in a vehicle. The vehicle may be, for example, an electric vehicle, a hybrid electric vehicle or a plugin hybrid electric vehicle. The vehicle includes a four-wheeled vehicle or a two-wheeled vehicle.

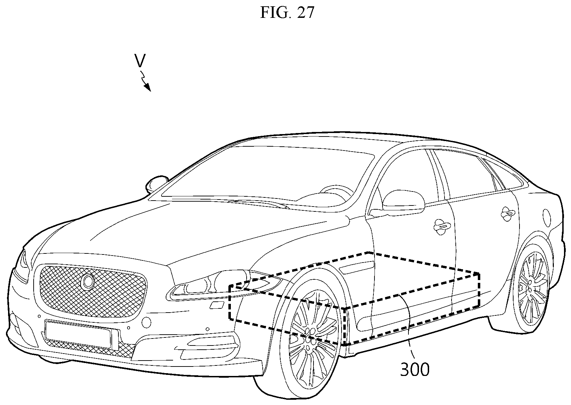

FIG. 27 is a diagram illustrating the vehicle including the battery pack 300 of FIG. 26.

Referring to FIG. 27, the vehicle V according to an embodiment of the present disclosure includes the battery pack 300 according to an embodiment of the present disclosure. The vehicle V operates by the power supplied from the battery pack 300 according to an embodiment of the present disclosure.

According to the present disclosure, the use of the uncoated portion protruding at the upper part and the lower part of the electrode assembly as the electrode tab may reduce the internal resistance of the cylindrical battery cell and increase the energy density.

According to another aspect of the present disclosure, the improved uncoated portion structure of the electrode assembly may prevent the interference between the electrode assembly and the inner circumferential surface of the battery can in the process of forming the beading portion of the battery can, thereby preventing internal short circuits of the cylindrical battery cell that may occur due to partial deformation of the electrode assembly.

According to another aspect of the present disclosure, the improved uncoated portion structure of the electrode assembly may prevent the uncoated portion near the notching valley from tearing when bending the uncoated portion and adequately increase the number of overlapping layers of the uncoated portion, leading to improved weld strength.

According to another aspect of the present disclosure, the improved uncoated portion structure adjacent to the core of the electrode assembly may prevent the cavity at the core of the electrode assembly from being blocked when bending the uncoated portion, making it easy to perform the electrolyte solution injection process and the welding process between the battery can and the current collector plate.

According to another aspect of the present disclosure, it may be possible to provide the cylindrical battery cell having the structure for achieving low internal resistance, preventing internal short circuits and improving the weld strength of the current collector plate and the uncoated portion, and the battery pack and the vehicle including the same.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### EXAMPLE

### (1) Preparation of current collector

### 1) Preparation of positive electrode current collector

As shown in [TABLE 1] below, a metal foil (thickness 15 µm) for a current collector, for example, aluminum, including an uncoated portion in which groups 1 and 2 segments will be formed, was prepared.

In the metal foil, the length along the winding direction from the core to the outer circumference was (B1+B2+B3)4,000mm, and the width along the winding axis direction was 75 mm. The metal foil includes a core-side uncoated portion B1, an outer circumference-side uncoated portion B3, and an intermediate uncoated portion B2 between the core side portion and the outer circumference side portion. The length of B1 was 350 mm, the length of B2 was 3500 mm and the length of B3 was 150 mm.

A predetermined width of the metal foil inward from a second side in the width direction was defined as a positive electrode active material portion, the remainder was defined as an uncoated portion or a first part, and the height of the core-side uncoated portion and the outer circumference-side uncoated portion in the winding axis direction was smaller than that of the intermediate uncoated portion.

### 2) Preparation of negative electrode current collector

A negative electrode current collector was prepared in the same way as the positive electrode current collector except that a copper foil (thickness 10 µm) was used as the current collector and the width along the winding axis direction was 80 mm.

**[TABLE 1]**

| | | | Example 1 | Example 2 | Comparative example 1 |
|---|---|---|---|---|---|
| Total length of current collector (mm) (length from core to outer circumference) | | | 4000 mm | 4000 mm | 4000 mm |
| Total width of current collector (mm) | Negative electrode | | 80 mm | 80 mm | 80 mm |
| | Positive electrode | | 75 mm | 75 mm | 75 mm |
| Length of B1 (mm) | | | 350 mm | 350 mm | 350 mm |
| Length of B2 (mm) | | | 3500 mm | 3500 mm | 3500 mm |
| Length of each group (mm)(group 1 to group 7) | | | 500 mm | 500 mm | 500 mm |
| Height of segments of B2 (C2) (mm) | | Group 1 | 5 mm | 5 mm | 5 mm |
| | | Group 2 to group 7 | 6 mm | 6 mm | 6 mm |
| Length of B3 (mm) | | | 150 mm | 150 mm | 150 mm |
| Width of segments of B2 (C1) | | | 5 mm | 5 mm | 5 mm |
| Distance between segments (pitch, C3) | | | 0.5 mm | 0.5 mm | 0.5 mm |

### (2) Manufacture of negative electrode

Earthen natural graphite having the average particle size (D₅₀) of 11 µm, carbon black, carboxymethyl cellulose (CMC) and styrene butadiene rubber (SBR) were mixed with water at a weight ratio of 94:1.5:2:2.5 to prepare a slurry for a negative electrode active material portion such that the concentration of the remaining components except water was 50 wt%. Subsequently, the slurry was coated on the negative electrode active material portion of the prepared copper current collector surface at the travel speed of 40 m/min using a slot die. On the basis of the winding axis direction, the width of the negative electrode active material portion was 70 mm, and the width of the uncoated portion was 10 mm. The loading amount of the negative electrode active material was 16 mg/cm² on the electrode area basis. The copper foil coated with the slurry for the negative electrode active material portion was dried while passing through a 60m long hot air oven, and in this instance, the temperature of the oven was adjusted to maintain 130°C. Subsequently, roll pressing was performed to a target thickness of 180 µm to obtain a negative electrode with the density of 3.45 g/cc.

Subsequently, the intermediate uncoated portion was split into a plurality of segments to have the requirements of TABLE 1 below by laser notching. In this instance, the lower end of the notching valley of each segment was adjusted to have substantially the same height.

### (3) Manufacture of positive electrode

Li(Ni_{0.6}Mn_{0.2}Co_{0.2})O₂(NCM-622) as a positive electrode active material, carbon black as a conductive material and polyvinylidene fluoride (PVdF) as a binder were added to water as a dispersion medium at a weight ratio of 96:2:2 to prepare a positive electrode active material slurry. The slurry was coated on the surface of the prepared aluminum current collector, and dried and rolled in the same conditions as the negative electrode to manufacture a positive electrode. In the positive electrode, the width of the positive electrode active material portion was 65 mm, and the width of the uncoated portion was 10 mm on the basis of the winding axis direction.

In this instance, considering the theoretical discharge capacity of NMC 622, the positive electrode active material portion was adjusted so that the NP ratio of the battery is 1.18 (118%, about 27.7cm²).

Subsequently, the intermediate uncoated portion was split into a plurality of segments to have the requirements in the TABLE 1 below by laser notching. In this instance, the lower end of the notching valley of each segment was adjusted to have substantially the same height.

### (4) Manufacture of separator

About 5 wt% of polyvinylidene fluoride-co-hexafluoropropylene (PVdF-HFP) polymer was added to tetrahydrofuran (THF) and dissolved at 50°C for about 12 hours or more to prepare a polymer solution. BaTiO₃ powder having the particle size of about 400 nm was added to the polymer solution at the total solids of 20 wt% and dispersed to prepare a mixture solution (BaTiO₃/ PVdF-HFP = 80:20 (a weight ratio)). The mixture solution was coated on two surfaces of a polypropylene substrate using a doctor blade method. After the coating, THF was dried to obtain a final organic/inorganic composite porous separator. The thickness of the final separator was about 30 µm. As a result of measuring with a porosimeter, the final organic/inorganic composite porous separator had the pore size of 0.4 µm and porosity of 60%.

### (5) Preparation of electrode assembly

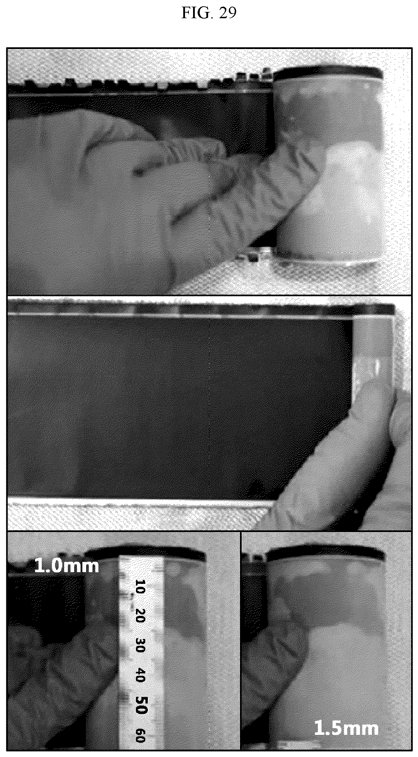

The as-prepared negative electrode, separator and positive electrode were stacked in that order and wound to manufacture a jellyroll-type electrode assembly. Example was stacked with the structure shown in FIG. 9a, and comparative example was stacked with the structure shown in FIG. 8. In the Example, L1 was 2.5 mm, and L2 was 1.5 mm. In the Comparative example, the positive electrode, the negative electrode and the separator were arranged such that the surface of the negative electrode active material portion and the positive electrode active material portion was covered with the separator. Meanwhile, it was confirmed from FIG. 29 that the length from two ends on top/bottom of the electrode assembly to the end of the separator was about 1.0 mm and 1.5 mm, respectively.

### (6) Manufacture of battery (4680 type)

Groups 1 to 7 segments exposed at the upper part and the lower part of the electrode assembly of Example were bent toward the core, and the positive electrode current collector plate and the negative electrode current collector plate were welded to the upper bent surface and the lower bent surface, respectively. Subsequently, a cylindrical cell of the structure shown in FIG. 25 was fabricated. That is, the electrode assembly including the welded positive electrode current collector plate and the welded negative electrode current collector plate were inserted into a battery housing having an external terminal pre-installed therein, the positive electrode current collector plate was welded to the external terminal, and the edge of the negative electrode current collector plate was welded to the beading portion. Subsequently, the battery housing was placed in a chamber of an electrolyte injector in an upright position with the open portion of the battery housing facing the opposite direction to the gravity. Subsequently, 1.0M of LiPF₆ was dissolved in an organic solvent in which ethylene carbonate (EC), dimethyl carbonate (DMC) and diethyl carbonate (DEC) were mixed at a volume ratio of 1:2:1, to prepare a nonaqueous electrolyte solution. Subsequently, the electrolyte solution was injected through the open portion of the battery housing, the pressure of the chamber was increased to 800 kPa for 20 seconds and maintained for 150 seconds, and then the pressure of the chamber was reduced to -90 kPa for 20 seconds and the chamber was kept in a substantial vacuum state for 20 seconds. After the electrolyte solution filling process is completed, the open portion of the battery housing was sealed by a sealing body using a gasket to complete the fabrication of the cylindrical cell.

The above-described manufacturing process was substantially equally applied to fabricate the battery of comparative example.

### (7) Evaluation of electrolyte wetting

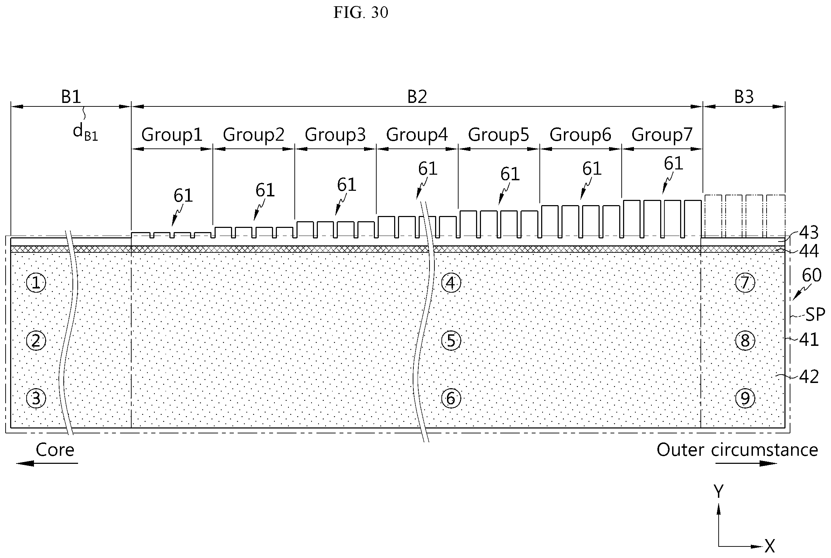

The battery of each of example and comparative example was disassembled to obtain the positive electrode and the negative electrode. Subsequently, each of the negative electrode and the positive electrode was cut into samples having a size of 10 cm² at a total of nine points. The nine samples include three samples (#1 to #3) taken from an area adjacent to the core of the electrode assembly, three samples (#7 to #9) taken from an area adjacent to the outer circumference of the electrode assembly and three sample (#4 to #6) taken from the central area of the electrode on the basis of the winding direction when the electrode is unfolded, and when taking each three samples from each sample collection area, each one was taken from the lower end, the center and the upper end of the active material layer along the winding axis direction. Meanwhile, #1, #4 and #7 indicate the area near one end of the electrode in the width direction, #3, #6 and #9 indicate the area near the other end of the electrode in the width direction, and #2, #5 and #8 indicate the intermediate area. FIG. 30 shows where the sample was taken. In this instance, FIG. 30 shows where the sample was taken based on FIG. 9a, and the above [TABLE 1] shows the shape or numerical value of the sample.

The amount of the electrolyte filled was determined by measuring the weight of the sample filled with the electrolyte solution, washing each sample with dimethylcarbonate (DMC), drying at 150°C, measuring the weight of the dried sample and calculating a weight difference before and after the filling.

For each of #1 to #9 in the positive electrode of Example, the amount of electrolyte filled was 21.7 mg, and comparative example was 20.7 mg. Additionally, the average amount of electrolyte filled in #1 to #9 of the negative electrode of Example was 35.6 mg, and comparative example was 33.2 mg.

Accordingly, it was confirmed that the electrode assembly of Example having the features of the present disclosure exhibited superior electrolyte wetting over Comparative example.

**[TABLE 2]**

| Electrode | Example | Comparative example |
|---|---|---|
| Positive electrode (mg/10cm²) | 21.7 | 20.7 |
| Negative electrode (mg/10cm²) | 35.6 | 33.2 |
| Sum (mg/10cm²)(positive electrode+negative electrode) | 57.3 | 53.9 |

### (8) Evaluation of capacity retention

The capacity retention was evaluated using the batteries manufactured in Example and Comparative example. To measure life characteristics and capacity retention of each battery, from 1st cycle to 100th cycle, constant current charging was performed at 1.0C to 4.25V, and constant current discharging was performed to 2.5V. In the present disclosure, capacity retention may be defined as Equation 1 below. Capacity retention (%) = [100th cycle discharge capacity/1st cycle discharge capacity] × 100

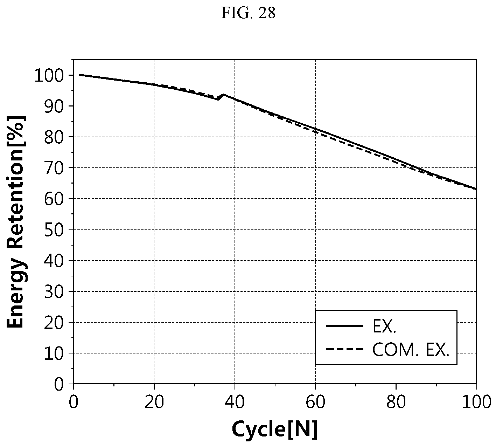

FIG. 28 is a graph showing the comparison of battery capacity between the batteries of Example and Comparative example. Referring to FIG. 28, the battery according to the present disclosure exhibited superior electrical and chemical properties over the battery having the conventional structural features like comparative example. **In** FIG. 28, the solid line indicates the battery of Example, and the dashed line indicates the battery of Comparative example. Accordingly, it was confirmed that compared to the related art, the battery according to the present disclosure was advantageous for stability improvement because electrochemical performance did not degrade and there was little or no damage to the separator when manufacturing the electrode assembly.

## Claims

1. An electrode assembly comprising:
a first electrode plate, a second electrode plate and a separator between the first electrode plate and the second electrode plate,
wherein the first electrode plate is a positive electrode plate and the second electrode plate is a negative electrode plate, or the first electrode plate is a negative electrode plate and the second electrode plate is a positive electrode plate,
wherein each of the first electrode plate, the second electrode plate and the separator has, independently, a strip shape having an aspect ratio of more than 1, and the first electrode plate, the second electrode plate and the separator are stacked such that each length direction is parallel to each other,
wherein each of the first electrode plate, the second electrode plate and the separator has, independently, a first side and a second side, wherein the first side is a first end in a thickness direction and the second side is a second end opposite the first side,
wherein each of the first electrode plate and the second electrode plate includes a first part and a second part on at least one surface, the first part is a coated electrode active material portion and extends from the second side toward the first side, and the second part is an uncoated electrode active material portion and extends from the first side to the electrode active material portion toward the second side,
wherein in the electrode assembly, the first side of the first electrode plate and the first side of the second electrode plate are arranged facing opposite directions, and
wherein in the electrode assembly, the first side of the separator protrudes beyond the second side of the first electrode plate and is disposed on the electrode active material portion of the second electrode plate, and the second side of the separator protrudes beyond the second side of the second electrode plate and is disposed on the uncoated portion of the first electrode plate.

2. The electrode assembly according to claim 1, wherein the second electrode plate is a negative electrode plate.

3. The electrode assembly according to claim 1, wherein on a width direction basis, a width of the electrode active material portion of the first electrode plate is narrower than a width of the electrode active material portion of the second electrode plate, and two ends of the electrode active material portion of the first electrode plate in the width direction are disposed between two ends of the electrode active material portion of the second electrode plate in the width direction.

4. The electrode assembly according to claim 1, wherein at least part of the uncoated portion of at least one of the first electrode plate or the second electrode plate is split into a plurality of segments by a cutting groove of a predetermined depth.

5. The electrode assembly to claim 4, wherein each of the plurality of segments has a square or rectangular, trapezoidal, triangular, parallelogram, semicircular or half oval or ellipse structure.

6. The electrode assembly according to claim 5, wherein the first electrode plate has the first electrode plate segments, and
wherein the separator is disposed to cover a notching valley of the cutting groove of the segments.

7. The electrode assembly according to claim 1, wherein the electrode assembly has a plurality of winding turns by winding the first electrode plate, the second electrode plate and the separator around an axis in the length direction.

8. The electrode assembly according to claim 6, wherein the electrode assembly has the plurality of winding turns by winding the first electrode plate, the second electrode plate and the separator around the axis in the length direction, and
wherein all or at least some of the segments are radially bent with respect to the axis at a bend point, wherein the bend point is any one point within the segments.

9. The electrode assembly according to claim 8, wherein the second side of the separator is disposed on the uncoated portion of the first electrode plate and interposed between the electrode active material portion and the bend point.

10. The electrode assembly according to claim 9, wherein the bend point is spaced 0.1 mm or more apart from the second side of the separator.

11. The electrode assembly according to claim 1, wherein the uncoated portion of the first electrode plate, the second electrode plate or both of them includes a core-side uncoated portion adjacent to a core of the electrode assembly, an outer circumference-side uncoated portion adjacent to an outer circumference surface of the electrode assembly and an intermediate uncoated portion between the core-side uncoated portion and the outer circumference-side uncoated portion,
wherein the core-side uncoated portion, the outer circumference-side uncoated portion or both of them has a shorter distance from the electrode active material portion to the first side than the intermediate uncoated portion, and
wherein the electrode active material portion has a constant width from the core to the outer circumference on the thickness direction basis.

12. The electrode assembly according to claim 1, wherein the uncoated portion of the first electrode plate, the second electrode plate or both of them includes a core-side uncoated portion adjacent to a core of the electrode assembly, an outer circumference-side uncoated portion adjacent to an outer circumference surface of the electrode assembly and an intermediate uncoated portion between the core-side uncoated portion and the outer circumference-side uncoated portion,
wherein the core-side uncoated portion has a shorter distance from the electrode active material portion to the first side than the intermediate uncoated portion and the outer circumference-side uncoated portion, and
wherein the electrode active material portion has a constant width from the core to the outer circumference on the thickness direction basis.

13. The electrode assembly according to claim 11 or 12, wherein the core-side uncoated portion includes the uncoated portion of an electrode plate part corresponding to an innermost winding turn of the electrode assembly, and the outer circumference-side uncoated portion includes the uncoated portion of the electrode plate part corresponding to an outermost winding turn of the electrode assembly.

14. The electrode assembly according to claim 12, wherein all or at least part of the intermediate uncoated portion is split into a plurality of segments.

15. The electrode assembly according to claim 11 or 12, wherein at least part of the intermediate uncoated portion has a stepwise increasing height in a winding axis direction from the core toward the outer circumference.

16. The electrode assembly according to claim 4, wherein a notching valley of each segment and the electrode active material portion are spaced a predetermined distance apart from each other.

17. The electrode assembly according to claim 1, wherein the separator includes a porous polymer substrate; and a porous coating layer on at least one surface of the porous polymer substrate, the porous coating layer including inorganic particles and a binder polymer.

18. The electrode assembly according to claim 17, wherein the inorganic particles include inorganic particles having hydrophilic properties on a surface.

19. A cylindrical battery cell comprising:
the electrode assembly according to any one of claims 1 to 18;
a battery can accommodating the electrode assembly and electrically connected to one of the first electrode plate and the second electrode plate, the battery can being a first polarity;
a sealing body to seal an open end of the battery can; and
a terminal electrically connected to the other one of the first electrode plate and the second electrode plate, and having an exposed surface, the terminal being a second polarity.

20. A battery pack comprising at least one battery cell according to claim 19.
